# EUROPÄISCHE PATENTSCHRIFT

(11) **EP 3 684 715 B1**
(45) Veröffentlichungstag und Bekanntmachung des Hinweises auf die Patenterteilung: **05.05.2021**
(21) Anmeldenummer: 18766262.2
(22) Anmeldetag: 11.09.2018
(51) Int. Cl.: B65G 17/46, B65G 17/06, B65G 17/40, B65G 17/34, B65G 17/38

(54) **KETTENGLIED, FÖRDERKETTE, KETTENFÖRDERER UND DESSEN VERWENDUNG**
CHAIN LINK, CHAIN, CHAIN CONVEYOR AND ITS USE
MAILLON, CHAINE, CONVOYEUR À CHAINES ET SON UTILISATION

(30) Priorität: 11.09.2017 AT 5016617 U
(43) Veröffentlichungstag der Anmeldung: 29.07.2020
(73) Patentinhaber: Gassner Verwaltungs-GmbH, 5020 Salzburg (AT)
(72) Erfinder: GASSNER, Wolfgang, 4890 Frankenmarkt (AT)
(74) Vertreter: KLIMENT & HENHAPEL
(86) Internationale Anmeldenummer: PCT/EP2018/074473
(87) Internationale Veröffentlichungsnummer: WO 2019/048704

(56) Entgegenhaltungen:
- WO-A1-2007/142559
- DE-A1- 10 207 687
- US-A1- 2005 103 606
- US-A1- 2005 269 188

## Beschreibung

### GEBIET DER ERFINDUNG

Die vorliegende Erfindung betrifft ein Kettenglied für einen Kettenförderer zur Förderung von Kleinteilen, insbesondere von Flaschenverschlüssen, mit einer, insbesondere ebenen, Auflagefläche für Kleinteile, wobei an gegenüberliegenden Seiten des Kettenglieds Mittel zum Aufstecken von zumindest einem Mitnehmer vorgesehen sind. Ebenso betrifft die Erfindung eine Förderkette aus solchen Kettengliedern, einen eine solche Förderkette aufweisenden Kettenförderer und die Verwendung eines solchen Kettenförderers zum Fördern von Verschlüssen.

### STAND DER TECHNIK

Kleinteile, wie z.B. Flaschenverschlüsse, die bereits vororientiert sind, werden horizontal üblicherweise mittels Bandförderern oder mittels Luftförderern befördert. Luftförderer können auch in leicht ansteigendem Winkel Steigungen überwinden, wobei je nach Typ, Gestalt und Werkstoff der Verschlüsse Anstiege von 10° bis 30° möglich sind. Je steiler der Anstieg, desto höhere Luftdrücke werden benötigt. Der Energiebedarf steigt sehr stark an, zugleich steigt der Abrieb der Verschlüsse, und die Methode ist dann nicht mehr schonend und aufgrund des Abriebs in Verbindung mit den entstehenden Luftverwirbelungen auch nicht mehr hygienisch. Das Fördern von Flaschenverschlüssen über steile Steigungen ist daher mit bekannten Luftförderern hygienisch einwandfrei nicht möglich.

Weiters sind aus anderen Bereichen der Fördertechnik kraftschlüssig arbeitende Förderer bekannt, z.B. so genannte Klemmbacken-Förderer. Das Fördergut wird von Klemmelementen bzw. Klemmbacken geklemmt und nach oben befördert. Empfindliche Kleinteile, wie z.B. dünnwandige Flaschenverschlüsse aus Kunststoff oder Metall, können so jedoch nicht zerstörungsfrei befördert werden, da sie dem beidseitigen Klemmdruck der Klemmbacken nicht standhalten und sich verformen. Dies gilt umso mehr als Flaschenverschlüsse aufgrund von Materialeinsparungsmaßnahmen ständig dünner hergestellt werden.

Aus der US 2005/269188 A1 ist eine Förderkette bekannt, die mehrere Glieder umfasst, die jeweils zwei gegenüberliegende Greifelemente 423 mit starren Adaptoren 492 aufweisen (Fig. 6). Eine ähnliche Förderkette zeigt die US 2005/103606 A1.

Auch sind Förderer bekannt, wo Kleinteile zwischen zwei umlaufenden Flachriemen geklemmt werden. Sowohl Klemmbacken-Förderer als auch Flachriemen-Förderer sind lediglich geeignet, Kurven in einer Ebene zu machen und werden daher nur zur Überwindung von vertikalen Strecken eingesetzt oder bei schrägen Strecken zur Überwindung des Höhenunterschiedes.

Auch wenn bei zwei umlaufenden Flachriemen nur ein geringer Anpressdruck zwischen den beiden Flachriemen aufgebracht wird, so ist es doch schwierig, längs der ganzen Förderstrecke einen gleichbleibenden Abstand zwischen den Flachriemen zu realisieren, damit der dazwischen befindliche Kleinteil immer gleich stark geklemmt wird. Zudem ist es schwierig, bei wechselnden Arten von Kleinteilen, etwa bei unterschiedlichen Verschlusstypen, einen geeigneten Abstand und einen geeigneten Anpressdruck einzustellen.

### AUFGABE DER ERFINDUNG

Der Erfindung liegt daher die Aufgabe zugrunde, Mittel zur Förderung von Kleinteilen, insbesondere von Flaschenverschlüssen, zur Verfügung zu stellen, welche die oben genannten Nachteile vermeiden und eine Förderung der Kleinteile ohne Beschädigung der Kleinteile ermöglichen, andererseits aber einfach an verschiedene Arten von Kleinteilen, die sich etwa im Durchmesser und/oder der Höhe unterscheiden, angepasst werden kann.

### DARSTELLUNG DER ERFINDUNG

Die gestellte Aufgabe wird durch ein Kettenglied für einen Kettenförderer zur Förderung von Kleinteilen, insbesondere von Flaschenverschlüssen, mit einer, insbesondere ebenen, Auflagefläche für Kleinteile, wobei an gegenüberliegenden Seiten des Kettenglieds Mittel zum Aufstecken von zumindest einem Mitnehmer vorgesehen sind, nach Anspruch 1 gelöst.

Diese Mitnehmer können in ihren Abmessungen an die Höhe, welche normal zur Auflagefläche gemessen wird, und/oder an den Durchmesser, der parallel zur Auflagefläche gemessen wird, ausgewählt und auf das Kettenglied aufgesteckt werden. Dadurch, dass keine Mitnehmer fest am Kettenglied vorgesehen oder einteilig mit diesem ausgeführt sind, ist ein Wechsel der Mitnehmer möglich.

Dadurch, dass die Mittel zum Aufstecken von zumindest einem Mitnehmer auf einander gegenüberliegenden Seiten angeordnet sind, kann ein zwischen den Mitteln befindlicher Kleinteil durch die beidseits aufgesteckten Mitnehmer zwischen den Mitnehmern gehalten werden. Dadurch ist die Lage des Kleinteils nicht nur durch die Auflagefläche des Kettenglieds festgelegt, sondern zusätzlich auch durch die Mitnehmer, sodass die Auflagefläche im Betrieb eines entsprechenden Kettenförderers auch aus der Horizontalen abweichen kann und der Kleinteil trotzdem durch die Mitnehmer in seiner Lage gehalten wird.

Die Kettenglieder sind aber auch ohne Mitnehmer verwendbar, etwa, wenn nur eine waagrechte Förderung stattfindet. Dann müssten auch keine Mittel zum Aufstecken von zumindest einem Mitnehmer vorgesehen werden. Andererseits ist es auch denkbar, dass die Kettenglieder keine Auflagefläche für Kleinteile aufweisen und die Kleinteile nur durch die Mitnehmer gehalten werden.

Das Kettenglied wird in der Regel symmetrisch zu seiner Förderrichtung ausgebildet sein und entsprechend sind auch die zumindest zwei Mittel zum Aufstecken eines Mitnehmers bezüglich der Förderrichtung in der Regel gleich und symmetrisch zueinander ausgebildet. Es ist aber auch möglich, an ein Kettenglied zwei unterschiedlich ausgebildete Mitnehmer aufzustecken. Dann sollten bei der gesamten Förderkette aber für alle Kettenglieder die Mitnehmer auf einer Seite alle gleich sein, also etwa in Förderrichtung gesehen links immer die gleiche Art von Mitnehmern, und rechts eine andere Art als links, aber untereinander gleich.

Pro Kettenglied sind zumindest zwei Mitnehmer vorgesehen, die im montierten Zustand einen Kleinteil zwischen einander festhalten, insbesondere klemmen, können. Die zwei Mitnehmer weisen jeweils einen Befestigungsteil auf, der auf ein Mittel zum Aufstecken aufsteckbar ist, sowie einen Greifteil, der aus einem weicheren Material gefertigt ist als der Befestigungsteil und einen oder mehrere Fortsätze aufweist, die im aufgesteckten Zustand des Mitnehmers zum jeweils anderen Mitnehmer hin ausgerichtet sind. Diese Fortsätze sind dann im montierten Zustand so lang, dass sie im Eingriff mit einem Kleinteil, insbesondere einem Flaschenverschluss, sind, der sich auf der Auflagefläche des Kettenglieds befindet.

Es können Mitnehmer mit unterschiedlicher Länge der Fortsätze vorgesehen werden, um Kleinteile unterschiedlichen Durchmessers halten zu können oder um unterschiedliche Biegsamkeit der Fortsätze zu erzeugen. Es können auch die Höhen der Mitnehmer, insbesondere der Greifteile mit den Fortsätzen, unterschiedlich sein, um Kleinteile unterschiedlicher Höhe halten zu können. Die Höhe wird normal zur Auflagefläche des Kettenglieds gemessen.

Der Greifteil kann nur einen Fortsatz aufweisen oder mehrere. Ein Greifteil mit einem Fortsatz kommt z.B. zur Anwendung, wenn robuste Kleinteile gefördert werden.

Insbesondere kann vorgesehen sein, dass die Mittel zum Aufstecken eines Mitnehmers als flügelartige Auskragungen ausgebildet sind, die quer zu einer Förderrichtung des Kettenglieds ausgerichtet sind. Die Auskragungen können dabei insbesondere normal zur Förderrichtung ausgerichtet sein. Es befindet sich, in Förderrichtung gesehen, also beispielsweise eine Auskragung links und eine Auskragung rechts am Kettenglied. Auf jede dieser Auskragungen kann ein Mitnehmer aufgeschoben bzw. aufgesteckt werden. Die beiden Flanken einer Auskragung sind daher zumindest abschnittsweise parallel zueinander, insbesondere kann die Auskragung selbst quer zur Förderrichtung zumindest abschnittsweise gleiche Breite aufweisen.

Es kann vorgesehen sein, dass die Mittel zum Aufstecken eine Zahnung aufweisen, die ein Verzahnen oder Verrasten mit einem Mitnehmer ermöglichen. Insbesondere die Auskragung kann besonders gestaltete Kontaktflächen für die Mitnehmer aufweisen, um die Beweglichkeit der Mitnehmer auf der Auskragung zu beeinflussen. So können die Kontaktflächen quer zur Aufsteckrichtung des Mitnehmers gezahnt oder geriffelt ausgeführt sein. Alternativ oder zusätzlich kann die Auskragung auch schienenförmig ausgestaltet sein, um das Aufstecken und Verschieben von entsprechend geformten Mitnehmern zu ermöglichen bzw. zu erleichtern. Die Auskragung kann auch ein Rastelement, wie einen oder mehrere Vorsprünge, aufweisen, an welchen ein Mitnehmer einrasten kann, der dazu korrespondierende Rastelemente, wie Vertiefungen, aufweist. Alternativ zur Verzahnung können auch Bohrungen (Löcher) oder Schlitze an den Auskragungen vorgesehen sein, in die mit passenden Gegenstücken versehene Mitnehmer gesteckt und eingerastet werden können.

Damit eine aus den erfindungsgemäßen Kettengliedern gebildete Förderkette in Förderrichtung aus der Förderebene hinaus in einer Kurve nach oben oder nach unten geführt werden kann, müssen die Kettenglieder normal zur Förderrichtung gegeneinander verschwenkt werden können. Dies kann in vorteilhafter Weise so erreicht werden, dass auf der Seite des Kettenglieds, die von der Auflagefläche abgewandt ist, zumindest ein Kopfteil sowie ein dem Kopfteil in Förderrichtung gegenüber liegender Gabelteil mit zwei Schenkeln vorgesehen ist, wobei der Gabelteil so ausgebildet ist, dass der Kopfteil eines Kettenglieds zwischen die Schenkel des Gabelteils eines folgenden Kettenglieds eingeschoben werden kann. Die Auflageflächen können dann eine im Wesentlichen durchgängige Auflagefläche bilden.

In dieser eingeschobenen Position können zwei Kettenglieder dann gelenkig miteinander verbunden werden, indem etwa vorgesehen ist, dass der Kopfteil und der Gabelteil, insbesondere dessen Schenkel, Öffnungen für die Aufnahme eines Kettenbolzens zum gelenkigen Verbinden zweier Kettenglieder aufweist. Der Kettenbolzen kann dann, wenn der Kopfteil eines Kettenglieds zwischen die Schenkel des Gabelteils eines folgenden Kettenglieds eingeschoben ist, durch die in dieser Position fluchtenden Öffnungen des Kopfteils des einen und des Gabelteils des anderen Kettenglieds geschoben und entweder am Kopfteil oder am Gabelteil gegen ein Herausrutschen fixiert werden.

Damit eine aus den erfindungsgemäßen Kettengliedern gebildete Förderkette in der Förderebene in einer Kurve nach links oder nach rechts geführt werden kann, müssen die Kettenglieder normal zur Förderrichtung in der Ebene der Auflageflächen gegeneinander verschwenkt werden können. Dies kann in vorteilhafter Weise so erreicht werden, dass der Kopfteil einen Hohlraum zur Aufnahme eines im Hohlraum drehbaren Zugstücks aufweist, wobei durch die Ausbildung des Hohlraums eine Drehachse des Zugstücks normal zur Förderrichtung des Kettenglieds festgelegt ist, insbesondere normal zur Auflagefläche, und wobei die Öffnungen im Kopfteil als in Förderrichtung ausgerichtete Langlöcher gestaltet sind, um einen maximalen Drehwinkel festzulegen.

Das Zugstück ist entsprechend dem Hohlraum im Kopfteil geformt, sodass es im Kopfteil geführt und verdrehbar ist. Normal zu seiner Drehachse weist das Zugstück eine Bohrung auf, die den Kettenbolzen im Wesentlichen formschlüssig aufnehmen kann und die mit den Öffnungen des Kopfteils, nämlich insbesondere den Langlöchern, fluchtet. Ist der Kettenbolzen durch den Kopfteil und das Zugstück durchgesteckt, so kann sich das Zugstück relativ zum Kopfteil nur so weit verdrehen, wie dies das Langloch zulässt. Mit der Länge des Langlochs wird der Winkel festgelegt, mit dem sich ein Kettenglied gegen das nächste Kettenglied in der Ebene der Auflagefläche verdrehen kann.

Der Hohlraum im Kopfteil ist vorzugsweise zylindrisch ausgebildet, das Zugstück kann entsprechend als Voll- oder als Hohlzylinder ausgebildet sein.

Damit die Mitnehmer möglichst einfach, nämlich ohne Werkzeug nur von Hand, gewechselt werden können, sind zwei vorteilhafte Befestigungsarten für die Mitnehmer vorgesehen: ein Aufschieben ohne Verrasten mit dem Mittel zum Aufstecken am Kettenglied und ein Aufschieben mit Verrasten am Mittel zum Aufstecken.

In beiden Fällen wird vorzugsweise vorgesehen sein, dass der Befestigungsteil zum Verschieben am Mittel zum Aufstecken ausgebildet ist. Insbesondere kann vorgesehen sein, dass am Befestigungsteil als Führungsschienen dienende Haltestege für das Mittel zum Aufstecken vorgesehen sind.

Für den Fall des Aufschiebens ohne Verrasten kann der Befestigungsteil ein Betätigungsmittel zum Verschieben am Mittel zum Aufstecken aufweisen. Dieses Betätigungsmittel kann ein Fortsatz oder ein Bolzen sein, an dem im Betrieb ein Verschiebemittel, etwa ein feststehendes Führungselement, wie eine Kulisse, angreifen und den Befestigungsteil quer zur Förderrichtung variabel verschieben kann. Die Mitnehmer können etwa von der Seite aufsteckbar, aber nicht einrastend, sondern quer zur Förderrichtung gleitend beweglich ausgeführt sein.

Das Betätigungsmittel kann im Falle eines Bolzens, z.B. Metallbolzens, im Befestigungsteil befestigt werden. Das Betätigungsmittel kann aber auch im Falle des Fortsatzes einteilig mit dem Befestigungsteil und aus dem gleichen Material hergestellt werden wie der Befestigungsteil, z.B. durch Spritzguss.

Das Kettenglied, insbesondere seine Auskragung, kann - auch bei Befestigung ohne Verrasten - verzahnt und gleich ausgeführt sein wie bei einer Verzahnung zwischen Kettenglied und Mitnehmer, die Mitnehmer sind aber glatt ausgeführt. Jeder Mitnehmer kann dadurch nach dem Aufstecken auf das Kettenglied innerhalb eines gewissen Bereiches quer zur Förderrichtung gleiten. In jedem Mitnehmer steckt dann z.B. ein Bolzen, welcher nach oben hin auskragt. Dieser Bolzen kann nun mittels einer Nut in einer Führung (Kulisse) oder Querbegrenzung geführt werden. Durch Veränderung entweder der Lage der ganzen Kulisse quer zur Förderrichtung, oder durch Lage der Nut in der Kulisse, oder beides, kann der Mitnehmer quer zur Förderrichtung beliebig innerhalb der am Kettenglied vorgegebenen Grenzen verschoben werden. Dies ist vorteilhaft, weil ein einfaches Verstellen des Abstandes zwischen den Greifteilen möglich ist, etwa für z.B. einen Sortenwechsel bei Verschlüssen. Allerdings ist der Aufbau des Kettenförderers komplizierter und aufwändig, spezielle Verschiebemittel, wie Führungen oder Kulissen, sind notwendig.

Für den Fall des Aufschiebens mit Verrasten ist der Befestigungsteil zum Einrasten am Mittel zum Aufstecken ausgebildet. Dabei sind die Mitnehmer beispielsweise von der Seite aufsteckbar und in verschiedenen Querpositionen einrastend fixiert. Das Kettenglied, insbesondere die Auskragung des Kettenglieds, und die Mitnehmer sind verzahnt und rasten beim Aufstecken ineinander ein. Verschiedene Mitnehmer-Höhen sind durch Aufstecken unterschiedlich hoher Mitnehmer realisierbar. Verschiedene Breiteneinstellungen sind durch unterschiedlich weites Aufstecken in der Verzahnung quer zur Förderrichtung realisierbar. Das gegenseitige Verzahnen ist einfach im Aufbau, allerdings wird durch das Aufschnappen der Abstand zwischen den Greifteilen der Mitnehmer fix festgelegt, und kann nur durch neuerliches Abschnappen und in anderer Position Neu-Aufschnappen wieder verändert werden. Dies erfordert je nach Länge des Fördergerätes und Anzahl der Kettenglieder eine mitunter lange Umrüstzeit.

Die beiden Varianten mit und ohne Verrasten unterscheiden sich vorzugsweise nur durch die Gestaltung der Mitnehmer. Das Kettenglied an sich kann in beiden Varianten gleich bleiben.

Es kann vorgesehen sein, dass der Greifteil mehrere finger- oder lappenförmige Fortsätze aus elastischem Material zum Halten von Kleinteilen aufweist. Mit finger- oder lappenförmig ist gemeint, dass die Breite der Finger oder Lappen in etwa in der gleichen Größenordnung wie deren Abstände liegt, es können aber auch die Abstände der Finger oder Lappen zwei- bis dreimal so groß sein wie deren Breite. Damit können sie sich auch normal zur ihrer Längserstreckung verformen, weisen aber noch genug Stabilität auf, um nicht abzuknicken. Es können z.B. zwei bis zehn finger- oder lappenförmige Fortsätze vorgesehen sein, z.B. drei, vier, fünf oder sechs finger- oder lappenförmige Fortsätze. Je weniger Fortsätze vorgesehen sind, umso günstiger ist dies für die Reinigung der Greifteile bzw. Kettenglieder.

Die Finger oder Lappen können gerade ausgeführt sein. Sie können sich zu ihrem freien Ende hin verjüngen, um dort, wo sie mit den Kleinteilen in Eingriff sind, verformbarer zu sein als an deren Basis. Der Querschnitt kann, in Höhenrichtung gesehen, gleich bleiben.

Eine Ausführungsform der Erfindung besteht darin, dass der Greifteil genau einen Fortsatz aus elastischem Material zum Halten von Kleinteilen aufweist oder bildet, welcher Fortsatz ausgebildet ist, um im aufgesteckten Zustand des Mitnehmers einen Kleinteil mit zumindest einer ebenen Begrenzungsfläche zu berühren. Der Greifteil kann etwa als einzelne Backe ausgebildet sein, z.B. mit einem im Wesentlichen rechteckigen oder dreieckigen Querschnitt.

Eine andere Ausführungsform der Erfindung besteht darin, dass der Greifteil genau einen gekrümmten Fortsatz aus elastischem Material zum Halten von Kleinteilen aufweist, welcher Fortsatz ausgebildet ist, um im aufgesteckten Zustand des Mitnehmers einen Kleinteil mit seiner Krümmung zumindest teilweise zu umschließen.

Der Greifteil, egal ob mit einem oder mehreren Fortsätzen, sollte an seiner Oberfläche glatt ausgebildet sein. Wenn der Greifteil aus einem Schaumstoff gefertigt ist, sollten dessen Poren an der Oberfläche des Greifteils geschlossen sein. Denkbar wäre auch, dass der Greifteil als elastischer Hohlkörper ausgebildet ist, also etwa durch einen Gummiteil, dessen Wand den oder die Fortsätze ausbildet. Die Oberfläche des Greifteils sollte möglichst abriebfest ausgebildet sein.

Wenn der Greifteil aus einem Stück gefertigt ist, sind die Finger bzw. Lappen an ihrer Basis miteinander verbunden und die Gefahr, dass ein Finger oder Lappen sich löst, ist im Vergleich zu miteinander verklebten Fingern bzw. Lappen geringer. Insbesondere kann der einzelne Finger oder Lappen über die gesamte Höhe des Greifteils reichen. Dabei kann der Finger oder Lappen über die gesamte Höhe des Greifteils den gleichen Querschnitt aufweisen.

Um auch die Gefahr des Ablösens des Greifteils vom Befestigungsteil zu verringern, kann vorgesehen sein, dass der Befestigungsteil und der Greifteil durch ein gemeinsames Herstellungsverfahren, wie ein Zwei-Komponenten-Spritzgussverfahren, einteilig hergestellt sind.

Grundsätzlich können Befestigungsteil und Greifteil aber auch durch Vulkanisieren, Schweißen, Kleben oder mechanisch aneinander befestigt sein.

Eine Ausführungsform der Erfindung besteht darin, dass die Mitnehmer im aufgesteckten Zustand durch Federelemente zum jeweils gegenüberliegenden Mitnehmer hin vorgespannt sind.

Jeder Mitnehmer kann durch zumindest ein eigenes Federelement vorgespannt sein. Ein Federelement ist dabei an einer Seite mit dem Mitnehmer und an der anderen Seite mit dem Kettenglied verbunden. Das Federelement kann eine Zylinderfeder in Form einer Druckfeder sein. Das Federelement ist so bemessen, dass ein Kleinteil allein durch die Federelemente von den beiden Mitnehmern gehalten wird, ohne Verrastung der Mitnehmer am Kettenglied in dieser Position. Dies hat den Vorteil, dass am Befestigungsteil des Mitnehmers angeordnete Betätigungsmittel (z.B. Bolzen oder Fortsätze) nur beim Einlegen und Entnehmen der Kleinteile durch entsprechende Verschiebemittel, wie Kulissen, betätigt werden müssen. Denn da müssen die Mitnehmer gegen die Federkraft voneinander entfernt werden.

Eine bevorzugte Ausführungsform besteht darin, dass pro Kettenglied zwei Mitnehmer aufgeschnappt sind, einer links, einer rechts, beide gleitend und jeder wird mit einer kleinen Feder Richtung Kettenmitte gedrückt. Oben am Mitnehmer ist entweder, so wie bisher, ein Metallbolzen vorstehend angebracht, oder ein direkt mitgespritzter, nach oben vorstehender Zapfen aus dem gleichen Material wie der Befestigungsteil. Mit einer Steuerkulisse können dann am Beginn der Förderstrecke die federnden Mitnehmer so weit auseinander gedrückt werden, dass die Kleinteile, wie Verschlüsse, von oben oder horizontal übergeschoben zwischen die Mitnehmer zugeführt werden können und mit Ende der Kulisse werden sie sanft geklemmt, durch den Federdruck und die elastisch federnden Fortsätze. Umgekehrtes geschieht dann am Ende der Förderstrecke bei der Übergabe der Kleinteile, wie Verschlüsse, an eine nachgelagerte Rinne oder Fördergerät, vorzugsweise durch horizontales Ableiten. Das horizontale Überschieben und Ableiten geschieht vorzugsweise dann mittels in diese Einheiten integrierten schrägen Luftdüsen (Anschieben mit Sterilluft).

Die Erfindung umfasst auch eine Förderkette mit mehreren aufeinanderfolgenden erfindungsgemäßen Kettengliedern.

Die Kettenglieder können dabei derart ausgebildet sein, dass auf der Seite des Kettenglieds, die von der Auflagefläche abgewandt ist, zumindest ein Kopfteil sowie ein dem Kopfteil in Förderrichtung gegenüber liegender Gabelteil mit zwei Schenkeln vorgesehen ist, wobei der Gabelteil so ausgebildet ist, dass der Kopfteil eines Kettenglieds zwischen die Schenkel des Gabelteils eines folgenden Kettenglieds eingeschoben werden kann. Bei der Förderkette ist dann jeweils ein Kopfteil eines Kettengliedes mit dem Gabelteil des folgenden Kettengliedes mittels eines Kettenbolzens verbunden.

Für die Kettenglieder kann zusätzlich vorgesehen sein, dass der Kopfteil einen Hohlraum zur Aufnahme eines im Hohlraum drehbaren Zugstücks aufweist, wobei durch die Ausbildung des Hohlraums eine Drehachse des Zugstücks normal zur Förderrichtung des Kettenglieds festgelegt ist, insbesondere normal zur Auflagefläche, und wobei die Öffnungen im Kopfteil als in Förderrichtung ausgerichtete Langlöcher gestaltet sind, um einen maximalen Drehwinkel festzulegen. Entsprechend ist auch für jedes Kettenglied ein Zugstück vorgesehen, das im Kopfteil geführt und verdrehbar ist, wobei sich in der Bohrung des Zugstücks ein Kettenbolzen befindet.

Die Kettenbolzen werden von der Seite in die Öffnungen, etwa Bohrungen, des Kettengliedes und des Zugstückes eingeschoben bzw. eingepresst. Danach bilden sie eine dauerhafte Verbindung. Damit dies sichergestellt ist und ein ungewolltes Auswandern des Bolzens während des planmäßigen Betriebes vermieden wird, ist vorzugsweise der Bolzen an einer Stelle, die in die Bohrung des Kettengliedes eingepresst wird, mit einer Rändelung versehen, die zusätzlich zur kraftschlüssigen Verbindung durch plastische Verformung (Eindrücken in das Kettenglied beim Einpressen) eine formschlüssige Verbindung bewirkt.

Die Kettenglieder, vorzugsweise aus Kunststoff, sind untereinander verbunden durch einen Kettenbolzen, vorzugsweise aus Metall, wie z.B. rostfreiem Edelstahl, und durch ein zusätzlich eingefügtes, sogenanntes Zugstück. Zusammen bilden diese Teile somit einen endlosen umlaufenden Kettenstrang, die Förderkette.

Auf diese Förderkette können Mitnehmer aufgesteckt, insbesondere aufgeschnappt, werden. Jedes Kettenglied trägt vorzugsweise zwei Mitnehmer vorzugsweise gleicher Art (gleiche Höhe, Breite, Weichheit, glatt oder verzahnt,...) ausgewählt je nach Erfordernis des Fördergutes und optimal auf dieses abgestimmt.

Das Fördergut, vornehmlich Kleinteile aus Kunststoff oder Metall (Aluminium) wie z.B. Flaschenverschlüsse, Dosendeckel oder Dosen, Verschluss-Kappen oder Überkappen, wird in der Regel durch zwei Mechanismen befördert. Einerseits auf der Förderkette aufliegend durch Reibung, gleich wie auf einem normalen Förderband. Andererseits wird es bei Bedarf zusätzlich von auf das Kettenglied aufgesteckten Mitnehmern bzw. den in diese integrierten Greiferteilen seitlich von beiden Seiten sanft bzw. je nach Erfordernis stärker oder schwächer geklemmt.

Die Erfindung betrifft auch einen Kettenförderer mit einer erfindungsgemäßen Förderkette sowie einem Antrieb für diese Förderkette. Der Antrieb kann verschieden gestaltet werden.

Entweder läuft die Förderkette an den beiden Enden des Fördergerätes, also an den Enden der Förderstrecke, noch über Antriebs- und/oder Umlenkräder. Vorzugsweise befindet sich das fördernde Kettenstück (Trum) an der Oberseite, und das rücklaufende Kettenstück an der Unterseite.

Vorzugsweise wird eine Kopfantriebsstation mit verzahntem Antriebsrad verwendet und am gegenüberliegenden anderen Ende eine Umlenkscheibe, vorzugsweise glatt, oder auch verzahnt, aber immer mitlaufend. Alternativ können auch die Scheiben beider Enden verzahnt und angetrieben sein. Ein derartiger Doppelantrieb kann bei sehr langen Förderstrecken Anwendung finden. Alternativ kann auch eine sogenannte Omega-Antriebsstation an beliebiger Stelle des rücklaufenden Kettenstücks (Trums) verwendet werden. In diesem Fall werden kopf- und fußseitig, also an den Enden der Förderstrecke, nur Umlenkräder eingesetzt.

Für den Kettenförderer kann vorgesehen sein, dass zumindest abschnittsweise auf beiden Seiten der Förderkette parallel zur Förderrichtung Kettenführungsprofile vorgesehen sind, auf denen die Förderkette mit ihren Mitteln zum Aufstecken von zumindest einem Mitnehmer aufliegt.

Geführt wird die Förderkette also etwa durch zwei beidseitig (1x linksseitig und 1x rechtsseitig der Förderkette) angebrachte Kettenführungsprofile aus reibungsarmem und verschleißstabilem Kunststoff. Vorzugsweise findet hier ultrahochmolekulares Niederdruck-Polyethylen (UHMNDPE) Anwendung mit speziellen, die Reibung nochmals vermindernden Additiven (LF-Zugabe, Low Friction). Diese Kettenführungsprofile sind auf jeder Seite in gleicher Weise - in Höhenrichtung gesehen, vorzugsweise zwischen der Auskragung und dem die Bohrung für den Kettenbolzen tragenden Bohrungsstummel, der außen am Schenkel des Gabelteils vorgesehen ist - angeordnet und begrenzen die Position der Förderkette mit leichtem Spiel in beiden Koordinaten quer zur Förderrichtung. Das linke und das rechte Kettenführungsprofil besitzen vorzugsweise die gleiche Geometrie und können wahlweise auf den Körper (Traggerüst) des Kettenförderers in einfacher Weise aufgesteckt bzw. aufgeschoben werden.

Wenn die Kettenglieder der Förderkette Mitnehmer aufweisen und deren Befestigungsteil ein Betätigungsmittel zum Verschieben am Mittel zum Aufstecken aufweist, dann können am Kettenförderer Verschiebemittel, insbesondere relativ zur Förderkette feststehende Kulissen, vorgesehen sein, mit welchen die Betätigungsmittel zum Verschieben der Mitnehmer längs der Mittel zum Aufstecken kontaktierbar sind. Die Verschiebemittel, also etwa Kulissen, greifen an den Betätigungsmitteln, wie Fortsätzen oder Bolzen, der Mitnehmer an und verschieben die Mitnehmer quer, insbesondere normal, zur Förderrichtung, nach innen (für Kleinteile mit geringerem Durchmesser) oder nach außen (für Kleinteile mit größerem Durchmesser). Es können dabei die Mitnehmer auf beiden Seiten der Förderkette, insbesondere im gleichen Ausmaß, verschoben werden, oder nur die Mitnehmer auf einer Seite der Förderkette. Auf die gleiche Weise kann auch für Kleinteile mit gleichem Durchmesser durch Verschieben der Verschiebemittel der Klemmdruck variiert werden.

Für den Fall, dass die Mitnehmer im aufgesteckten Zustand durch Federelemente zum jeweils gegenüberliegenden Mitnehmer hin vorgespannt sind, sind diese Verschiebemittel nur in den Abschnitten des Kettenförderers zum Einlegen und Entnehmen der Kleinteile vorgesehen. Denn da müssen die Mitnehmer gegen die Federkraft voneinander entfernt werden, um die Kleinteile einlegen oder entnehmen zu können. Für die restlichen Abschnitte des Kettenförderers werden die Kleinteile durch die vorgespannten Mitnehmer gehalten.

Die Verschiebemittel, also etwa Kulissen, sind vorzugsweise selbst einstellbar. So kann vorgesehen sein, dass die Verschiebemittel quer zur Förderrichtung verstellbar sind, um einen vorgegebenen Abstand zwischen zwei gegenüber liegenden Mitnehmern eines Kettengliedes einstellen zu können.

Zusätzlich oder alternativ kann vorgesehen sein, dass der Abstand zwischen Förderkette und Verschiebemittel einstellbar ist, um einen Eingriff zwischen dem Verschiebemittel und Mitnehmern unterschiedlicher Höhe sicherstellen zu können. Mit anderen Worten liegt eine Verstellbarkeit des Verschiebemittels in Höhenrichtung der Kettenglieder vor.

Sowohl Kettenglied, als auch Zugstück und Mitnehmer sind derart gestaltet, dass nach dem Verbinden zur Förderkette ein Lauf dieser Förderkette nicht nur in geradliniger Richtung in einer Ebene (Förderebene) möglich ist, sondern auch ein Durchlaufen von Kurven beliebiger Winkelgrade in dieser Förderebene. Limitiert ist lediglich der minimale Radius der durchlaufen werden kann, da es sonst zu einem innenseitigen Berühren der Auskragungen aufeinander folgender Kettenglieder und/oder anderer Elemente, wie der Mitnehmer, kommt. Um dies zu verbessern, können die Auskragungen der Mitnehmer an den funktionslosen Enden, also am gegebenenfalls seitlich über die Mitnehmer hinausragenden Überstand, geschrägt ausgeführt sein.

Erzeugt wird die Kurvenbahn bei großen Kurvenradien durch entsprechenden Lauf der die Kette führenden Kettenführungsprofile. Bei engeren Kurvenradien, vorzugsweise bei Radien kleiner als ca. 350 mm, kann die innenseitige Führungsbahn, also etwa das entsprechende Kettenführungsprofil, durch eine die Kette führende, um eine orthogonal zur Förderebene stehende Drehachse drehbare Führungsscheibe (Kurvenscheibe) aus hartem und verschleißzähem Kunststoff, z.B. aus Polyoxymethylen (POM) oder PA, ersetzt werden. Dies führt zu weniger Reibwiderstand. Alternativ zu einer großen Kurvenscheibe können viele kleine Rollen verwendet werden.

Außerdem sind Kettenglied, gegebenenfalls Zugstück und Mitnehmer vorzugsweise so gestaltet, dass nach dem Verbinden zur Förderkette ein Lauf der Förderkette nicht nur in einer Ebene (Förderebene) möglich ist, sondern auch bogenförmig aus dieser Ebene heraus. Außenbögen, bei denen die Mitnehmer außen liegen, können auch hier bei großen Radien durch entsprechenden Lauf der die Kette führenden Kettenführungsprofile erzeugt werden. Bei engeren Bogenradien, z.B. kleiner als ca. 200 mm, kommen auch hier drehbare Führungsscheiben (Bogenscheiben) zum Einsatz, bzw. Umlenkscheiben wie am Fußende des Kettenförderers (wenn dieser nur am Kopfende angetrieben wird).

Innenbögen, bei denen die Mitnehmer innen liegen, sind prinzipiell auch in beliebigen Radien möglich, limitiert nach unten aber durch das sich gegenseitige Berühren der Mitnehmer und durch etwaig nötige Umlenkscheiben für das rücklaufende Trum. Um dies zu verbessern können die senkrecht zur Förderrichtung stehenden Außenflächen der Mitnehmer geschrägt ausgeführt werden, sodass sie im montierten Zustand von der Auflagefläche weg mit zunehmender Höhe schmäler werden.

Eine Ausführungsvariante des Kettenförderers sieht vor, dass das rücklaufende Trum der Förderkette mit einer, insbesondere automatisch zuschaltbaren, Reinigungseinrichtung ausgestattet ist. Diese verfügt beispielsweise über Mittel zum Anspritzen der Förderkette mit Reinigungsmittel, eine oder mehrere rotierende Bürsten, und/oder Mittel zur (anschließenden) Warmluft-Trocknung. Zusätzlich oder alternativ kann das rücklaufende Trum mit einer automatischen Desinfektionseinheit ausgestattet sein, die etwa über Mittel zum Besprühen der Förderkette mit Desinfektionsmittel und optional eine anschließende Trocknung verfügt.

Mit der Erfindung kann eine Förderkette mit werkzeuglos aufsteckbaren und in unterschiedlichen Höhenvarianten ausgeführten Mitnehmern zur Verfügung gestellt werden.

Das Kettenglied selbst, also die Auflagefläche und die Mittel zum Aufstecken der Mitnehmer, und gegebenenfalls der Kopfteil sowie der Gabelteil, ist vorzugsweise einstückig ausgebildet, insbesondere aus einem Teil gefertigt, etwa durch Spritzguss.

Entsprechend ist das Kettenglied vorzugsweise aus Kunststoff hergestellt, wegen des geringen Gewichtes und der guten Reibeigenschaften, mit sehr guten Gleiteigenschaften (niedrige Reibung, hohe Verschleißstabilität). Optional kann dieser Kunststoff auch antistatisch ausgeführt werden, damit Staub und Abrieb nicht angezogen wird. Und/oder es kann durch Beigabe von Additiven im Herstellungsprozess auch eine antibakterielle Wirkung erzielt werden. Als Grundwerkstoff wird vorzugsweise Polyoxymethylen (POM) verwendet. Alternativ könnte Polyamid (PA) verwendet werde, oder ähnliche Kunststoffe mit ähnlichen Eigenschaften.

Die Oberfläche des Kettengliedes ist aus hygienischen Gründen möglichst glatt und ohne Vertiefungen ausgeführt.

Das erfindungsgemäße Kettenglied mit Mitnehmern gewährleistet eine formschlüssige, aber federnde Förderung der Kleinteile. Bei den Kleinteilen kann es sich beispielsweise um Behälterverschlüsse, z.B. um Verschlüsse von Marmelade- oder Gurkengläsern, insbesondere aber um Flaschenverschlüsse aus Metall oder Kunststoff handeln, wie Kronkorken oder Drehverschlüsse. Würde die Kraft auf die Fortsätze zu groß, würden diese nachgeben, um den Verschluss nicht zu beschädigen.

Die Mitnehmer greifen an den Kleinteilen primär formschlüssig, aber dennoch federnd an. Ein primär kraftschlüssiges Angreifen der Fördermittel an den Kleinteilen findet also nicht statt, durch beides wird eine Beschädigung der Kleinteile bei deren Förderung vermieden. Die Elastizität der Fortsätze des Greifteils der Mitnehmer kann dabei gegebenenfalls auf die zu fördernden Kleinteile abgestimmt werden. Die Abstimmung der Elastizität kann beispielsweise durch Wahl der Shore-Härte des Greifteils oder durch dessen Formgebung erfolgen.

Für den Greifteil mit seinen Fortsätzen können gummiartige Kunststoffe verwendet werden, wie vorzugsweise thermoplastische Elastomere (TPE), z.B. sogenannte TPE-U (oft auch kurz TPU) auf Urethan-Basis, oder sogenannte TPE-S (oft auch kurz TPS genannt) auf Styrol-Basis (Styrol-Blockcopolymere), oder thermoplastische Vulkanisate oder vernetzte thermoplastische Elastomere genannt TPE-V (oft auch kurz TPV genannt) z.B. auf Olefinbasis, oder auch sogenannte TPE-O (Olefinbasis). Je nach Anwendungsfall kommen andere derartige Kunststoffe zum Einsatz, abhängig davon, wie weich die Fortsätze sein müssen, wie abrasiv das Fördergut ist und wie hoch die Umgebungstemperaturen sind.

Die Shore-Härte schwankt dabei je nach verwendetem Kunststoff in der Regel zwischen ca. 45 Shore-A und 70 Shore-A. Wichtig ist, dass die Fortsätze, also die Finger, elastisch sind, aber auch dauerhaft rückfedern und ihre Form langfristig beibehalten.

Der Befestigungsteil, also der härtere Teil des Mitnehmers, muss sich bei einteiliger Herstellung des Mitnehmers gut mit dem weichen Teil, also dem Greifteil, verbinden. Vorzugsweise wird für den Befestigungsteil Polyamid (PA) oder POM oder Acrylnitril-Butadien-Styrol-Copolymer (ABS) oder ähnliches verwendet. In der Regel liegt die Härte des Befestigungsteils im Bereich von ca. 80-85 Shore D.

Nur eine umlaufende Förderkette zu haben statt zweier Förderriemen ist ein wesentlicher Vorteil, was die Komplexität des Kettenförderers betrifft. Mit der erfindungsgemäßen Förderkette können nicht nur gerade Förderstrecken - waagrecht, senkrecht oder schräg - realisiert werden, sondern auch Bögen, also ein gekrümmter Verlauf aus einer Förderebene heraus, und Kurven, also ein gekrümmter Verlauf in einer Förderebene. Gerade Strecken, Bögen und Kurven können beliebig kombiniert werden.

Mit dem erfindungsgemäßen Kettenförderer können vertikale und/oder horizontale Richtungsänderungen durchgeführt werden, während bei Anlagen gemäß dem Stand der Technik verschiedene aneinandergereihte Förderer dazu notwendig sind, sodass es bei solchen aneinandergereihten Förderern zu störungsanfälligen Übergaben der Kleinteile zwischen den Förderern kommen kann.

Dadurch, dass die Fortsätze der Greifteile bei der vorliegenden Erfindung nicht als separate Teile am restlichen Greifteil aufgebracht (aufgeschweißt oder in Bohrungen eingesetzt oder aufgeklebt) sind, sondern die ganze Weichkomponente in einem Stück gefertigt ist, können diese Fortsätze weniger leicht ausreißen oder ausfallen.

Mit den erfindungsgemäßen Greifteilen ist es leichter, einen geeigneten Anpressdruck für Verschlüsse einzustellen als mit zwei umlaufenden Flachriemen gemäß dem Stand der Technik, da die Fortsätze der Greifteile federnd ausgebildet sind.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Dabei zeigt:
- Fig. 1: eine Explosionsdarstellung eines Kettenglieds von vorne unten
- Fig. 2: eine Explosionsdarstellung eines Kettenglieds von seitlich oben
- Fig. 3: eine Explosionsdarstellung eines Kettenglieds von seitlich unten
- Fig. 4: Längsschnitt, Vorderansicht und Aufsicht für ein Kettenglied gemäß Fig. 1-3
- Fig. 5: Unteransicht, Querschnitt in Förderrichtung, Vorderansicht und Aufsicht eines Mitnehmers
- Fig. 6: Seitenansicht, Querschnitt normal zur Förderrichtung und Querschnitt parallel zur Förderebene eines Mitnehmers
- Fig. 7: eine Förderkette mit Verschlüssen in perspektivischer Darstellung
- Fig. 8: ein Querschnitt durch einen Kettenförderer
- Fig. 9: ein Verschiebemittel (Kulisse) mit Verstellelement eines Kettenförderers in perspektivischer Darstellung
- Fig. 10: eine perspektivische Ansicht eines Kettenförderers
- Fig. 11: ein Kettenglied in Vorderansicht mit einem flachen Kleinteil (Verschluss)
- Fig. 12: ein Kettenglied in Vorderansicht mit einem mittelhohen Kleinteil (Verschluss)
- Fig. 13: ein Kettenglied in Vorderansicht mit einem hohen Kleinteil (Verschluss)
- Fig. 14: ein Kettenglied mit Federelementen, mit den Mitnehmern in der maximal geöffneten Position, dargestellt im Querschnitt, in teilweise geschnittener Seitenansicht und Aufsicht
- Fig. 15: das Kettenglied aus Fig. 14, mit den Mitnehmern in der geschlossenen Position
- Fig. 16: das Kettenglied aus Fig. 14, mit den Mitnehmern in einer möglichen Halteposition
- Fig. 17 bis 22: zeigen verschiedene Ausführungen von Greifteilen bei Mitnehmern.

### WEGE ZUR AUSFÜHRUNG DER ERFINDUNG

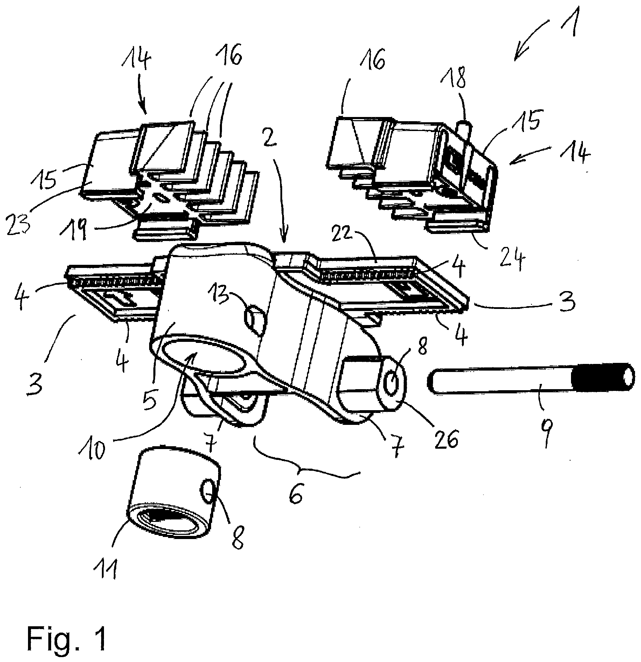

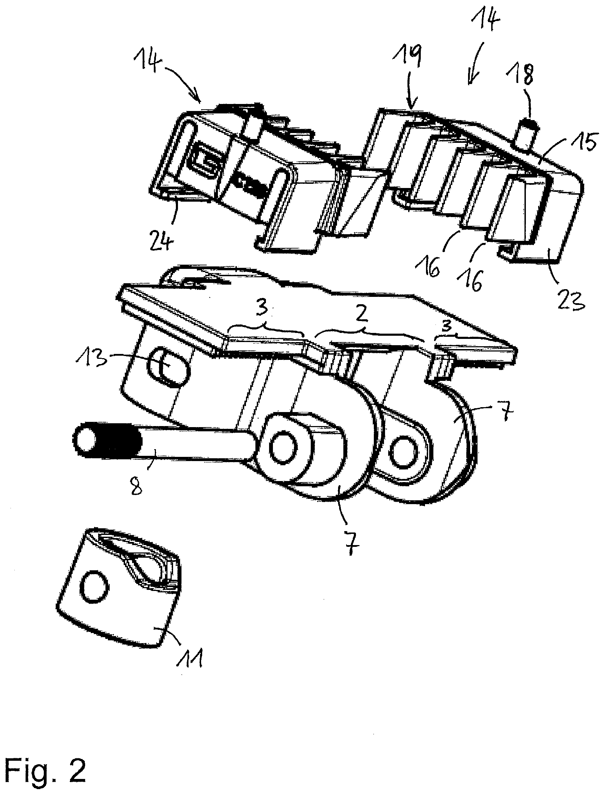

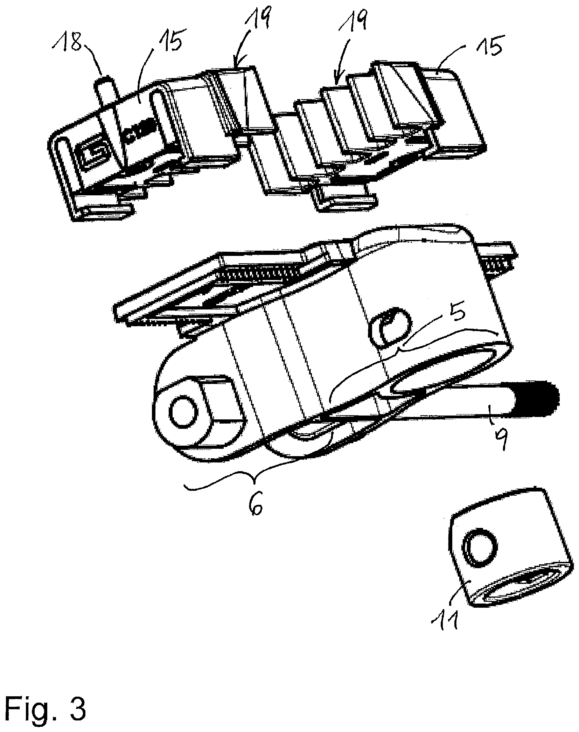

Die Fig. 1 bis 4 zeigen ein erfindungsgemäßes Kettenglied 1. Jedes Kettenglied 1 weist für den Kettenbolzen 9 drei Öffnungen 8, insbesondere in Form von Bohrungen, auf. Ein Langloch 13 im schmäleren Kopfteil 5, und zwei möglichst gut fluchtende Bohrungen im Gabelteil 6, hier eine in jedem Schenkel 7 des Gabelteils 6. Im Kopfteil 5, dort wo eine Öffnung in Form eines Langlochs 13 sitzt, weist das Kettenglied 1 an der Unterseite einen Hohlraum 10 zur Aufnahme des Zugstückes 11 auf.

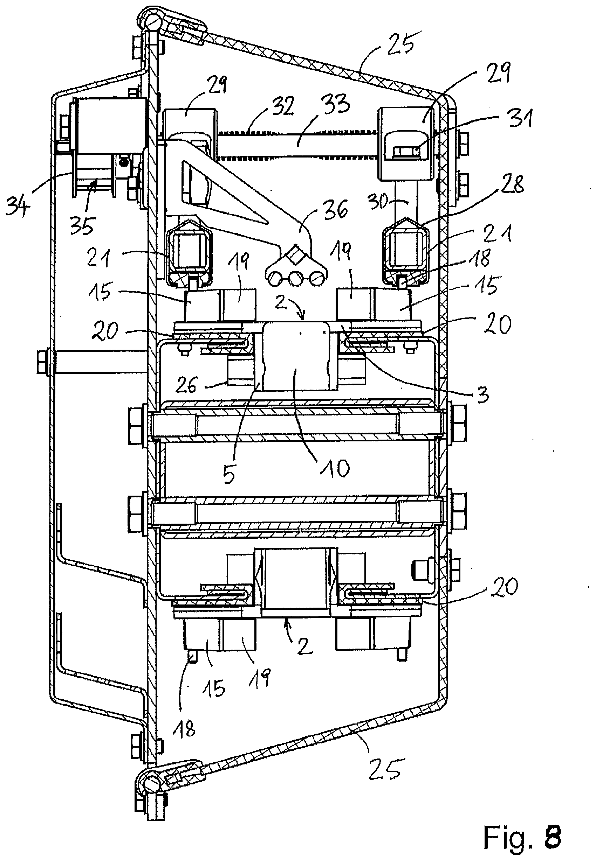

Im Mittenbereich weist das Kettenglied 1 an der Oberseite zwei flügelartige Auskragungen 3 auf, je eine in Förderrichtung 12 gesehen orthogonal nach links und nach rechts abstehend. Die Oberseite der Auskragungen 3 liegt hier in der gleichen Ebene wie die Auflagefläche 2, die Oberseite der Auskragungen 3 und die Auflagefläche 2 bilden die Förderebene. Diese Auskragungen 3 dienen einerseits dazu, um unter diesen Auskragungen 3 eine Gleitführung anbringen zu können, die über die Breite der Auskragungen 3 eine Führung bilden kann, die gesamte Auskragung 3 jeweils nach unten hin unterstützen kann und das Gewicht der aus den Kettengliedern 1 gebildeten Förderkette samt Fördergut abtragen kann. Diese Gleitführung kann durch Kettenführungsprofile 20, siehe Fig. 8, gebildet werden. Andererseits dienen diese Auskragungen 3 zur Befestigung und zur Aufnahme von unterschiedlich gestaltbaren Mitnehmern 14. Dabei ermöglichen sie durch eine Rasterung, wie etwa eine Zahnung 4 ein Aufstecken (Aufschnappen) von Mitnehmern 14, die ebenfalls verzahnt ausgeführt sein können, in unterschiedlicher, aber nach dem Aufstecken fixierter Position. Die Zahnung 4 bzw. der Aufschnappbereich reicht aber nicht bis zum außenseitigen Ende der Auskragung 3, sondern endet kurz davor. Auch endet die Zahnung 4 kurz vor dem mittigen Körperbereich des Kettengliedes 1, also kurz vor der Auflagefläche 2 für die Kleinteile. Die Zahnung 4 ist an beiden zueinander parallelen Flanken jeder Auskragung 3 vorgesehen, sowohl an der in Förderrichtung ausgerichteten Flanke und der gegen die Förderrichtung ausgerichteten Flanke. Die Zahnung 4 liegt an beiden Flanken und erstreckt sich in Höhenrichtung bevorzugt von der Mitte der Flanke bis zur Unterseite der Auskragung 3. Von der Mitte der Flanke bis zur Oberseite wird die Rasterung durch einen unverzahnten Vorsprung 22 überragt, welcher in einen als Führungsschiene dienenden Haltesteg 24 am Befestigungsteil 15 des Mitnehmers 14 eingreift.

Verrippungen können das Kettenglied 1 zur Aufnahme aller Kräfte verstärken.

Das Zugstück 11, welches von unten in den vorderen Teil des Kettengliedes 1, also den Kopfteil 5, eingesetzt wird, dient einerseits als Gelenk um Änderungen der Bewegungsrichtung des Kettengliedes 1 in horizontaler Ebene zu gewährleisten, andererseits für eine nahezu spielfreie Verbindung einzelner Kettenglieder 1 über den Gabelteil 6 und den Kettenbolzen 9 zum nachfolgenden Kettenglied 1 und in dieser Form zur optimalen Einleitung der bei der Bewegung der Förderkette auftretenden Kräfte vom vorhergehenden Kettenglied 1 in das Nachfolgende. Der minimale Radius, in welchem das Zugstück 11 eine Richtungsänderung zulässt, wird dabei durch die Geometrie des Kettengliedes 1 und der aufgesteckten Mitnehmer 14 definiert.

Das Zugstück 11 kann dabei aus dem gleichen Material hergestellt sein wie die Kettenglieder 1. Oder es kann zur Verringerung der Reibung und der Geräuschbildung aus einem anderen Material aber in den sonstigen Eigenschaften sehr ähnlichem Material hergestellt sein. Vorzugsweise wird für das Zugstück 11 Polyamid (PA) verwendet, alternativ könnten auch POM oder andere Kunststoffe mit ähnlich guten Festigkeitseigenschaften zur Anwendung kommen.

Auf die Kettenglieder 1 können bei Bedarf beliebig geformte Mitnehmer 14 aufgesteckt, insbesondere aufgeschnappt, werden. Bedarf besteht, wenn eine seitliche Führung für das Fördergut notwendig ist. Aufgesteckte Mitnehmer 14 haben als Führung den Vorteil, dass sie mit dem Fördergut mitfahren, und somit keine Relativbewegung zwischen Fördergut und Seitenführung vorliegt, wie dies bei anderen, feststehenden Führungen der Fall ist. Keine Relativbewegung bedeutet keine Reibung, kein Scheuern, kein Abrieb, kein "Engelshaar" wie bei Luftförderern. Bedarf kann aber auch bestehen, wenn die Förderrichtung 12 von der Horizontalen abweicht, und erstens die auf der Auflagefläche 2 übertragene Reibkraft nicht mehr ausreicht um das Fördergut weiter zu bewegen, oder zweitens das Fördergut durch die Schwerkraft sogar von der Förderoberfläche abkippen oder abfallen würde. In diesem Fall sorgen die Mitnehmer 14 sowohl für zusätzlichen Vortrieb als auch verhindern sie durch Klemmung ein Abkippen bzw. sich Lösen des Fördergutes vom Kettenglied 1.

Vorgesehen ist, dass auf jedes einzelne Kettenglied 1 vorzugsweise immer zwei Mitnehmer 14 aufgesteckt werden.

Genauer gesagt wird je ein Mitnehmer 14 auf die beiden Auskragungen 3 des Kettengliedes 1 aufgesteckt, ein Mitnehmer 14 auf den auf der linken Auskragung 3 vorgesehenen Bereich, einer auf den auf der rechten Auskragung 3 vorgesehenen Bereich.

Das Aufstecken (Aufschnappen) geschieht vorzugsweise von der Seite, die Aufsteckrichtung ist also insbesondere normal zur Förderrichtung. Das Aufstecken (Aufschnappen) geschieht vorzugsweise durch elastisches Dehnen bzw. elastisches Auseinanderspreizen von vorzugsweise zwei schmalen, am Mitnehmer 14, insbesondere am Befestigungsteil 15, vorgesehenen Befestigungslaschen (Schenkeln) 23, deren Ende einen Haltesteg 24 trägt zur Klammerung (Umschließung) an der Auskragung 3. Das Aufstecken und das Aufschnappen geschieht manuell von Hand, Werkzeug ist keines erforderlich. Ebenso können bereits aufgeschnappte Mitnehmer 14 händisch, durch Drücken und Ziehen und somit Dehnen der Befestigungslaschen 23 wieder zerstörungsfrei demontiert werden. Dies ermöglicht auch ein Wechseln unterschiedlicher Mitnehmer 14 bei Verwendung von anderem Fördergut.

Im aufgeschnappten Zustand liegen die beiden Befestigungslaschen (Schenkel) 23 des Mitnehmers 14 federnd mit leichtem Druck an den Flanken der Auskragung 3 des Kettengliedes 1 an, bzw. am unverzahnten, die Führung bildenden Vorsprung 22. Der Haltesteg 24 des Mitnehmers 14 untergreift den Vorsprung 22 dabei und berührt die Flanke der Auskragung 3 genau im Bereich von deren Zahnung (Rasterung) 4.

Vorteilhaft kann die Flanke des Haltesteges 24 in diesem Berührungsbereich in zwei unterschiedlichen Arten ausgeführt sein, entweder glatt (unverzahnt) oder auch verzahnt. Ist sie verzahnt, was hier nicht dargestellt ist, so greifen die Zähne der beiden Teile (des Haltestegs 24 des Befestigungsteils 15 und der Auskragung 3) ineinander und bewirken, dass der aufgeschnappte Mitnehmer 14 nicht bzw. nur mit größerer Kraft (je nach Federkraft der Haltesteges 24 bzw. der Befestigungslaschen 23) querverstellt werden kann. Ist sie unverzahnt (glatt), so wie in den Fig. 1-3, so ist der aufgeschnappte Mittnehmer 14 gut geführt und kann aber in Querrichtung relativ leicht querverschoben werden.

Alle Mitnehmer 14 sind gleich aufgebaut, und können durch symmetrische Ausführung in gleicher Weise wahlweise auf die linke oder auch die rechte Auskragung 3 aufgesteckt werden.

Den Grundsätzen des Hygienic Design folgend werden alle Oberflächen am Mitnehmer 14 möglichst glatt und ohne Vertiefungen (Höhlungen) ausgeführt. Ebenfalls werden alle Oberflächen möglichst geschrägt ausgeführt, damit Flüssigkeiten nicht stehen bleiben sondern abrinnen.

Vorzugsweise bestehen die Mitnehmer 14 aus zwei Komponenten. Einer weichen Komponente, hier der Greifteil 19, der weich und elastisch verformbar ausgeführt ist, und Greifelemente in Form von Fortsätzen 16 ausbildet, wie zum Beispiel dünne Finger bzw. Lappen. Durch diese wird das Fördergut mit leichtem Druck sanft und schonend geklemmt. Der auf das teils sehr empfindliche Fördergut ausgeübte Druck soll dabei möglichst gering sein. Dies kann durch die Länge der Finger, deren Breite, Dicke, Art, Form und Gestalt und vor allem durch die Weichheit bzw. Biegsamkeit des verwendeten Materials (vorzugsweise thermoplastische Kunststoffe, Gummi oder Ähnliches mit den Zusatzeigenschaften glatt und abriebfest), in vorteilhafter Weise beeinflusst und variiert werden. Im Herstellungsprozess beigegebene Additive können dazu beitragen, dass auch Eigenschaften wie antistatisch oder antibakteriell erzielt werden.

Die zweite Komponente des Mitnehmers 14 ist eine harte Komponente, welche die weiche Komponente hält, und beides fest (relativ starr) auf die ebenfalls relativ starre Förderkette befestigt und ausreichend Halt gibt, und Funktionen wie das Aufschieben bzw. Aufschnappen und die Querverstellung ermöglicht. Hier kommen Kunststoffe, wie z.B. POM, PA, ABS, PP, oder ähnlich geeignete zum Einsatz. Additive können dazu beitragen, dass auch hier Eigenschaften wie antistatisch oder antibakteriell erzielt werden. Die zweite Komponente wird durch den Befestigungsteil 15 verwirklicht.

Die beiden Komponenten des Mitnehmers 14, also der Befestigungsteil 15 und der Greifteil 19, können entweder getrennt hergestellt und dann zusammengefügt (verbunden) werden. Oder es können beide Komponenten auch durch kombinierte Fertigungsverfahren untrennbar verbunden hergestellt werden (z.B. mittels 2-Komponenten-Spritzgussverfahren).

Der Druck, den jeweils zwei Mitnehmer 14 auf das dazwischen geklemmte Fördergut ausüben, kann auch maßgeblich durch deren Position quer zur Förderrichtung beeinflusst werden, wie bereits beschrieben.

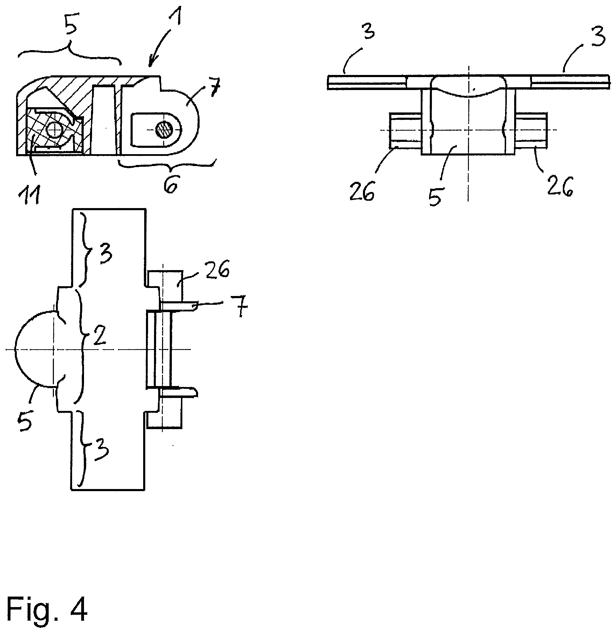

In Fig. 4 sind ein Längsschnitt, die Vorderansicht und die Aufsicht für ein Kettenglied gemäß den Fig. 1-3 dargestellt. Im Längsschnitt ist das Zugstück 11 im Kopfteil 5 erkennbar. In der Aufsicht ist erkennbar, dass die Auflagefläche 2 und die Oberseite der beiden Auskragungen 3 eine Ebene bilden.

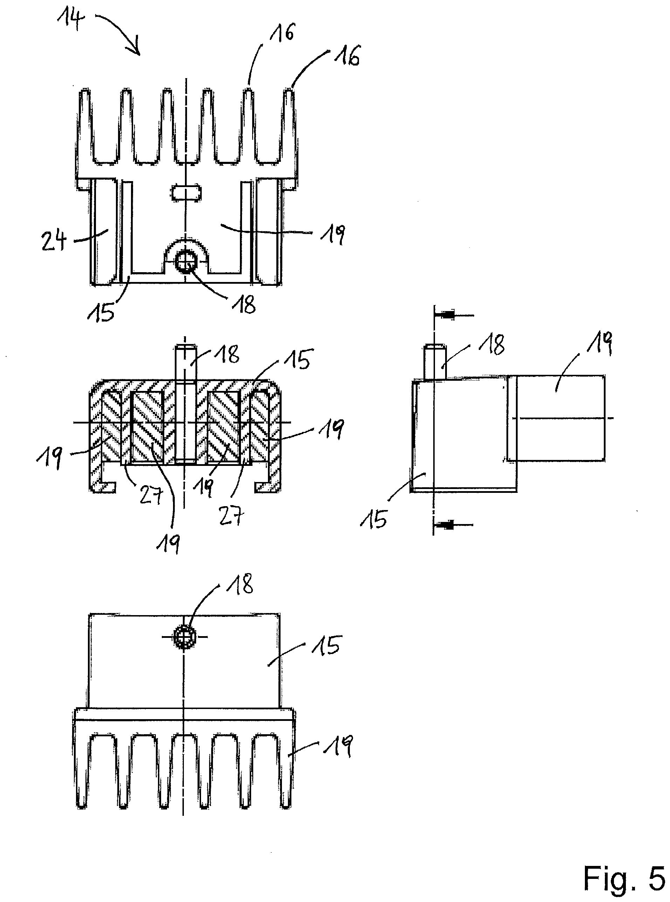

In Fig. 5 sind die beiden Teile des Mitnehmers 14 gut erkennbar. Oben in Fig. 5 ist die Unteransicht dargestellt, aus der die Form der einzelnen Fortsätze 16 des Greifteils 19 ersichtlich ist. In Richtung der Fortsätze 16, also im montierten Zustand quer, insbesondere normal, zur Förderrichtung 12, überlappt der Greifteil 19 mit dem Befestigungsteil 15. Hier füllt der Greifteil 19 den Befestigungsteil 15 vollständig aus, wobei natürlich die Haltestege 24 frei bleiben. Dadurch sind diese beiden Teile gut miteinander verbunden. Dies ist auch im darunter dargestellten Querschnitt ersichtlich. Der Befestigungsteil 15 weist hier innen noch Rippen 27 auf, die parallel zu den Befestigungslaschen 23 ausgerichtet sind, was ebenfalls der Verbindung zwischen Greifteil 19 und Befestigungsteil 15 dient. Auch die Aufnahme für den als Bolzen ausgeführten Betätigungsteil 18 durchdringt den Greifteil 19. In der Aufsicht des Mitnehmers 14 in Fig. 5 unten ist erkennbar, dass der Greifteil 19 außerhalb des Befestigungsteils 15 längs der Förderrichtung 12 breiter ist als der Befestigungsteil 15. Dadurch können die Greifteile 19, bzw. deren Fortsätze 16, in Förderrichtung 12 einen durchgehende Führung für die Kleinteile 17 bilden, während zwischen den Befestigungsteilen 15 von aufeinander folgenden Kettengliedern 1 ausreichend Abstand zum Durchfahren von Bögen oder Kurven besteht.

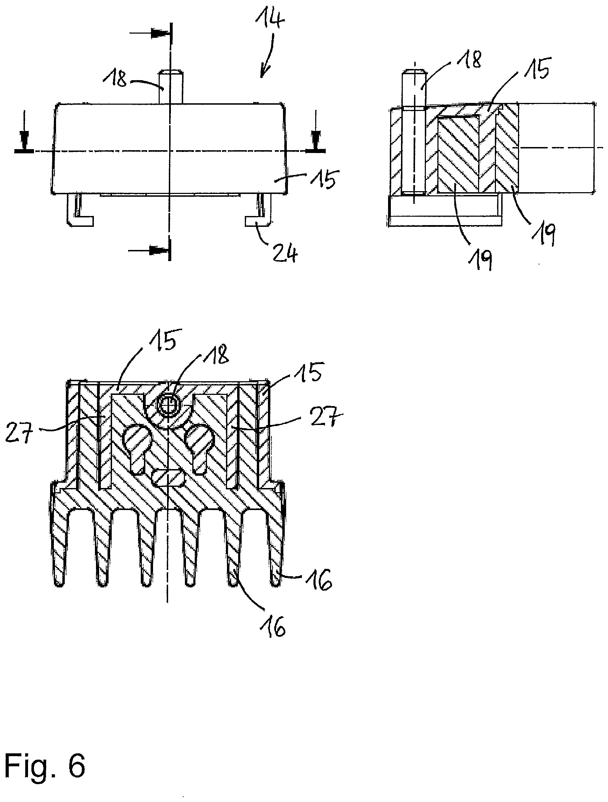

Fig. 6 zeigt die Seitenansicht, einen Querschnitt normal zur Förderrichtung und einen Querschnitt parallel zur Förderebene eines erfindungsgemäßen Mitnehmers 14, wie er in den Fig. 1-3 und 5 dargestellt ist. Auch aus den Schnitten in Fig. 6 ist erkennbar, dass Greifteil 19 und Befestigungsteil 15 formschlüssig ineinander greifen. Der Greifteil 19 füllt die Zwischenräume zwischen den Seitenwänden des Befestigungsteils 15, den Befestigungslaschen 23, und den Rippen 27 des Befestigungsteils 15 aus, sowie den Zwischenraum zwischen den Rippen 27.

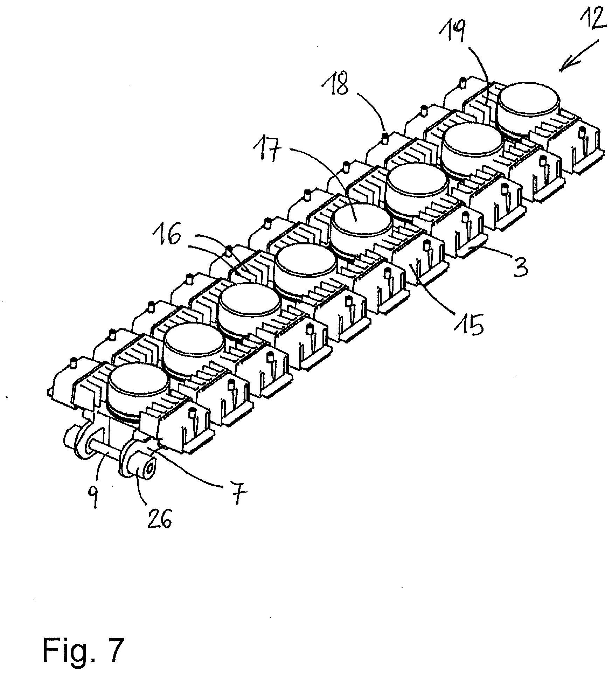

Fig. 7 zeigt eine Förderkette in perspektivischer Darstellung, auf der sich Kleinteile 17 in Form von Flaschenverschlüssen befinden.

Fig. 8 zeigt einen Querschnitt durch einen Kettenförderer, der aus erfindungsgemäßen Kettengliedern 1 aufgebaut ist. Das fördernde Kettenstück (Trum) befindet sich oben, und das rücklaufende Kettenstück (Trum) unten. Auf beiden Seiten der Förderkette sind parallel zur Förderrichtung Kettenführungsprofile 20 vorgesehen, auf denen die Förderkette mit ihren Auskragungen 3 aufliegt.

Diese Kettenführungsprofile 20 sind auf jeder Seite in gleicher Weise - in Höhenrichtung gesehen -zwischen der Auskragung 3 und dem die Öffnung (Bohrung) 8 für den Kettenbolzen 9 tragenden Bohrungsstummel 26, der außen am Schenkel 7 des Gabelteils 6 vorgesehen ist, angeordnet und begrenzen die Position der Förderkette mit leichtem Spiel in beiden Koordinaten quer zur Förderrichtung 12. Das linke und das rechte Kettenführungsprofil 20 besitzen die gleiche Geometrie und können wahlweise auf den Körper (Traggerüst) des Kettenförderers in einfacher Weise aufgesteckt bzw. aufgeschoben werden.

Die Mitnehmer 14 weisen an deren Befestigungsteil 15 an dessen Oberseite mittig ein Betätigungsmittel 18 in Form eines Bolzens zum Verschieben auf. Entsprechend sind am Kettenförderer Verschiebemittel 21, insbesondere relativ zur Förderkette feststehende Verschiebemittel, nämlich hier Kulissen, vorgesehen. Diese weisen eine Nut auf, in welcher die Betätigungsmittel 18 geführt und entsprechend dem Verlauf der Nut nach innen zur Auflagefläche 2 hin oder nach außen von der Auflagefläche 2 weg verschoben werden. Im dargestellten Fall werden dabei die Mitnehmer 14 auf beiden Seiten der Förderkette im gleichen Ausmaß verschoben.

Die Nut, die das Betätigungsmittel (den Bolzen) 18 führt, ist hier in einem Kunststoffprofil (vorzugsweise UHMNDPE) eingefräst, oder das Profil wird bei Serienfertigung gleich in dieser Form extrudiert. Das Kunststoffprofil hat im Querschnitt geringe Abmessungen, aber längs der Förderrichtung 12 erstreckt es sich entlang des gesamten Förderweges. Um bei solchen Längen eine zum metallenen Förderer-Körper unterschiedliche thermische Ausdehnung zu ermöglichen, ist es längs in einem metallenen Käfig 28, z.B. aus rostfreiem Edelstahl, geführt und hat in Abständen längs der Förderrichtung 12 kleine Fugen, die ein Ausdehnen ermöglichen ohne Spannungen (Verformungen) zu erzeugen. Die Fugen sind natürlich nur so breit, dass das Betätigungsmittel (der Bolzen) 18 darin nicht stecken bleiben kann. Der metallene Käfig 28 bewirkt auch eine bessere Steifigkeit und ermöglicht größere Befestigungsabstände.

Der Käfig 28 mit der Führungskulisse ist nun in Abständen von ca. 1-2 Metern nach oben hin an Verstellelementen 29 befestigt. Vorzugsweise ist die Befestigung mittels Distanzelementen 30, wie Distanzhülsen, oder sonst höhenverstellbar ausgeführt, sodass unterschiedlich hohe Mitnehmer 14 eingesetzt werden können. Das Distanzelement 30 ist mittels einer Schraube 31 befestigt.

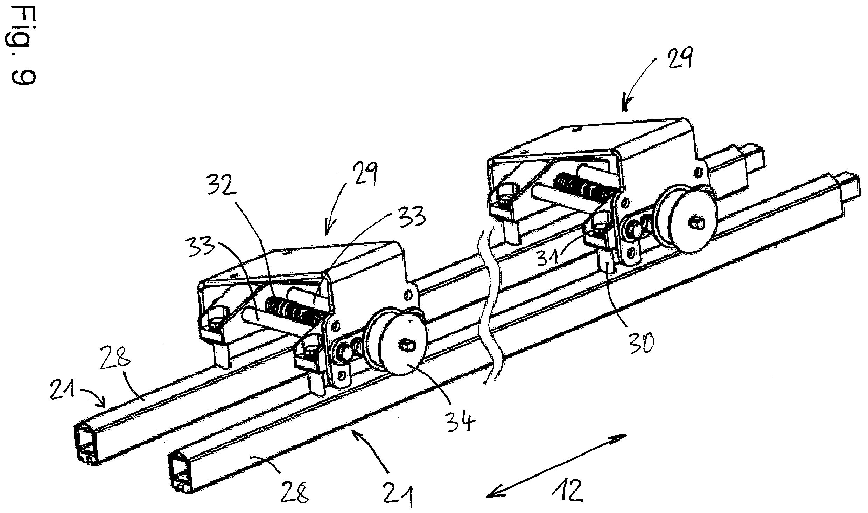

In dieser Weise sind der linke und der rechte Käfig 28 (Kulisse) auf Trapezgewindemuttern unterschiedlicher Gangrichtung befestigt (1x Linksgewinde, 1x Rechtsgewinde, vorzugsweise immer Trapezgewinde). Diese Trapezgewindemuttern sitzen auf einer zentral angeordneten Trapezgewindespindel 32 mit von der Mitte weg unterschiedlicher Gangrichtung (eine Seite Linksgewinde, eine Rechtsgewinde), und auf mindestens einem, vorzugsweise zwei zusätzlichen Führungselementen 33 in der Form z.B. eines Rundstahles (Längsachse), die ein Mitdrehen der Trapezgewindemutter mit der Trapezgewindespindel 32 verhindern und für gute Führung sorgen und dafür, dass keine Biegekraft und kein Moment in die Kulissen bzw. die Käfige 28 eingeleitet wird. Dies ist in Fig. 9 besser erkennbar. Durch synchrones Drehen an diesen Trapezgewindespindeln 32 der Verstellelemente 29 können die beiden daran befestigten Käfige 28 mit den Kulissen zentrisch verstellt werden.

Das synchrone Drehen kann wie im vorliegenden Fall durch Zahnriemenscheiben 34 (einen pro Verstellelement 29) und einen Zahnriemen 35 (hier nicht eingezeichnet) erfolgen. Alternativ durch Getriebe und Wellen, oder sonstige Mittel zum synchronen Antrieb. Der Anrieb kann händisch durch eine Kurbel oder motorisch durch einen Antrieb erfolgen.

Alternativ zu dem vorzugsweisen Spindeltrieb könnten zur Abstandsverstellung auch zwischen den Käfigen 28 angeordnete Exzenter oder Exzenterscheiben oder Spiralscheiben oder Parallelogrammführungen mit Schubstangen und Hebeln zur zentrischen Verstellung herangezogen werden.

In Fig. 8 ist auch eine Oberführung 36 vorgesehen, die von oberhalb der Auflagefläche 2 mit den Kleinteilen 17 in Eingriff gebracht werden kann. Diese Oberführung 36 kann bei Bedarf an kritischen Stellen der Förderstrecke eingesetzt werden, wie z.B. in steilen Anstiegen bis hin zur Senkrechten oder gar überhängenden Förderabschnitten (wo die Auflagefläche 2 nach unten weist); oder im Aufgabe- und im Abgabe-Bereich des Kettenförderers, wo sich Verschlüsse drängeln und gegenseitig stoßen können.

Es ist wichtig, dass die Mitnehmer 14, insbesondere deren Stabilität und Steifigkeit, sehr genau an die zu befördernden Kleinteile 17 bzw. deren Gewicht und Größe angepasst sind, um ein ungewolltes Durchrutschen der Kleinteile zu vermeiden.

Um ein Verschmutzen und Verkeimen der Kleinteile 17 auf der Förderkette zu verringern, ist die Förderkette mit einer Einhausung 25 umgeben. Diese ist hier in zwei Teilen ausgeführt, wobei die einzelnen Teile durch Schwenken geöffnet und geschlossen werden können. Die Einhausung 25 kann durchsichtig sein, etwa aus Polycarbonat, gefertigt sein, damit die Vorgänge innerhalb der Einhausung beobachtet werden können.

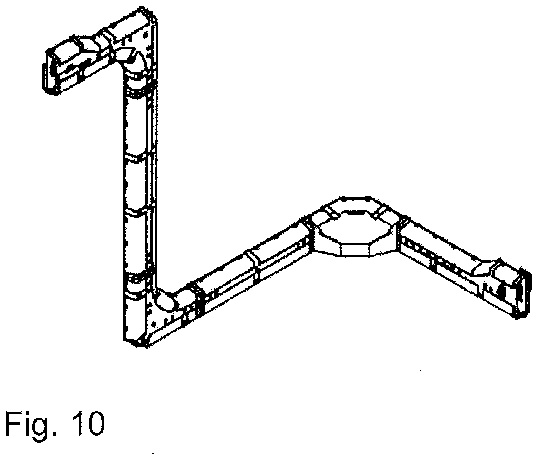

Fig. 10 zeigt eine perspektivische Ansicht eines möglichen Kettenförderers, der von einer Einhausung 25 umgeben ist. Es sind hier vier gerade Förderabschnitte vorgesehen, die jeweils durch eine Umlenkung um 90° ineinander übergehen, wobei die Umlenkungen entweder durch die Kettenführungsprofile 20 selbst oder durch drehbare Führungsscheiben (Bogenscheiben) bzw. Umlenkscheiben erfolgt, wie dies durch eine entsprechende Form der Einhausung bei der ersten Umlenkung rechts unten erkennbar ist.

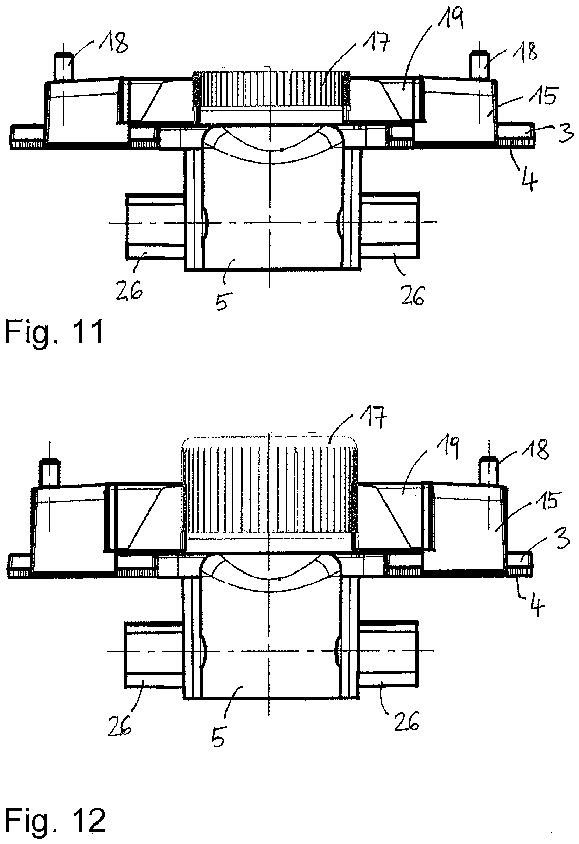

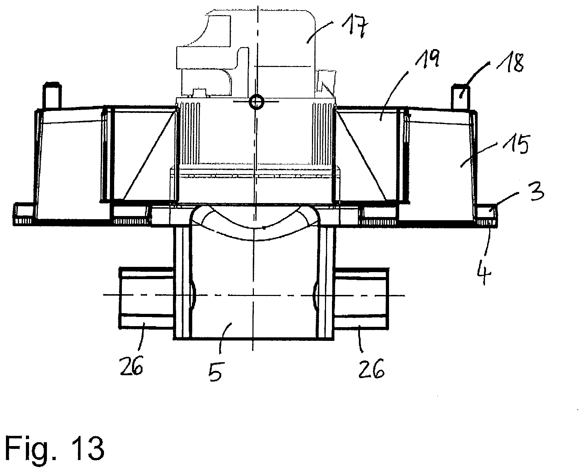

Fig. 11-13 zeigen jeweils das gleiche Kettenglied 1, insbesondere mit den gleichen Auskragungen 3, wobei aber die Mitnehmer 14 in jeder Figur anders ausgeführt sind. Der Mitnehmer 14 in Fig. 11 hat die geringste Höhe, der Greifteil 19 und der Befestigungsteil 15 schließen oben auf gleicher Höhe ab, sind aber etwas weniger hoch als der Kleinteil (Flaschenverschluss) 17. Der Mitnehmer 14 in Fig. 12 ist höher als jener in Fig. 11, der Greifteil 19 und der Befestigungsteil 15 schließen oben wieder auf gleicher Höhe ab, der Kleinteil (Flaschenverschluss) 17 ragt über den Mitnehmer 14 hinaus. Der Mitnehmer 14 in Fig. 13 hat die größte Höhe, entsprechend sind auch der Greifteil 19 und der Befestigungsteil 15 höher ausgeführt, wobei auch hier der Kleinteil (Flaschenverschluss) 17 über den Mitnehmer 14 hinausragt.

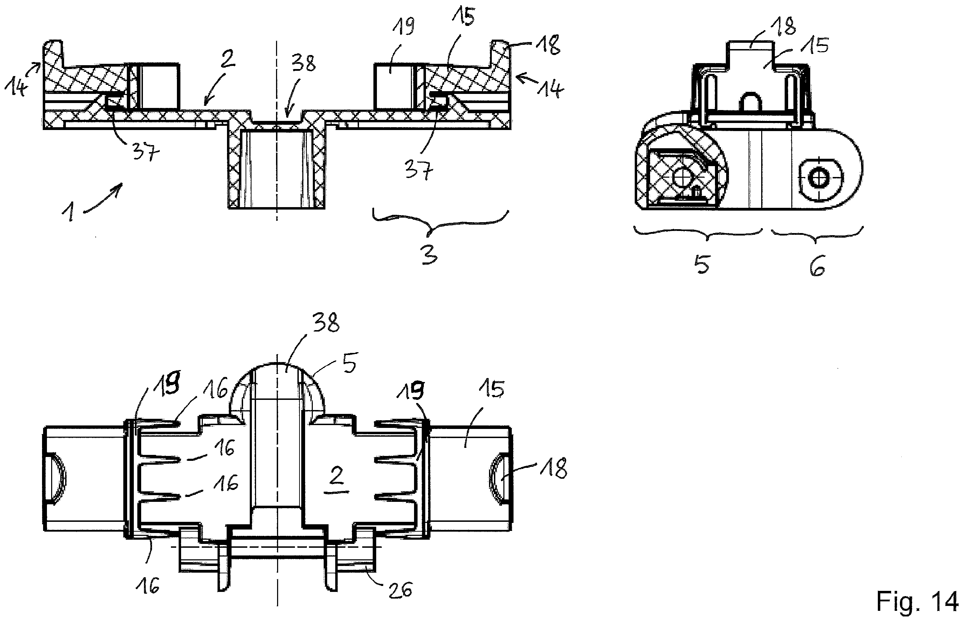

In Fig. 14 ist ein Kettenglied dargestellt, bei welchem die Mitnehmer 14 mit Federelementen 37 vorgespannt sind, also von den Federelementen 37 zueinander gezogen werden. Pro Mitnehmer 14 ist ein Federelement 37 vorgesehen. Das Federelement 37 ist vom Mitnehmer 14 und dem Kettenglied 1, genauer dessen Auskragung 3, umgeben. Das Federelement 37 ist hier in einer Ausnehmung an der Unterseite des Mitnehmers 14 angeordnet. Das Federelement 37 stützt sich hier nach außen an einem Vorsprung des Kettenglieds 1 bzw. dessen Auskragung 3 ab. Das Federelement 37 ist als zylindrische Feder ausgebildet. Die Mitnehmer sind hier in der der maximal geöffneten Position dargestellt. Diese kann erreicht werden, wenn die Mitnehmer mittels ihres Betätigungsmittels 18 durch Verschiebemittel 21, wie Kulissen, nach außen gedrückt werden.

Der Greifteil 18 der Mitnehmers 14 hat hier vier dünne Fortsätze 16 und ist besonders für empfindliche Kleinteile 17 geeignet. In der Mitte der Auflagefläche 2 ist in Förderrichtung eine Rinne 38 vorgesehen. Das Kettenglied 1 weist also hier auf der Oberseite in der Mitte eine zentrisch angeordnete Vertiefung, eine breite Rinne 38 auf. Diese dient der besseren Übergabe in eine an die erfindungsgemäße Förderrichtung anschließende Verschlussrinne oder in ein anderes Förderelement oder in ein sonstiges Gerät am Ende der Förderstrecke. Dabei läuft die Förderkette bestehend aus den Kettengliedern 1 z.B. über ein Umlenkrad (dieses kann auch das Antriebsrad sein), und ein Abnahme-Keil oder eine Abnahme-Klinge greift in Förderrichtung in diese Rinne 38 ein, so dass das Fördergut, also Kleinteile wie ein Verschluss, nicht dem Bogen der Förderkette folgt, sondern gerade über den Abnahme-Keil oder die Abnahme-Klinge weiter geschoben wird.

Auch die Aufgabe der Kleinteile 17 auf die Kettenglieder 1 am Beginn der Förderstrecke kann mittels Rinne 38 und mit einem entsprechenden Aufgabe-Keil oder einer Aufgabe -Klinge erfolgen. Die Aufgabe kann aber auch mittels einer Schwerkraftrinne, z.B. schräg von oben, erfolgen.

Sonst sind in Fig. 14 das Kettenglied 1 und die Mitnehmer 14 gleich wie in den Fig. 1 bis 13 ausgebildet. Eine Zahnung 4 an der Auskragung 3, wie in Fig. 1-3, ist dann allerdings nicht notwendig. Sollte eine Zahnung 4 an der Auskragung 3 vorliegen, könnten dennoch Federelemente 37 verwendet werden, wenn der Mitnehmer 14 keine Zahnung aufweist und somit auf der Auskragung 3 gleiten kann.

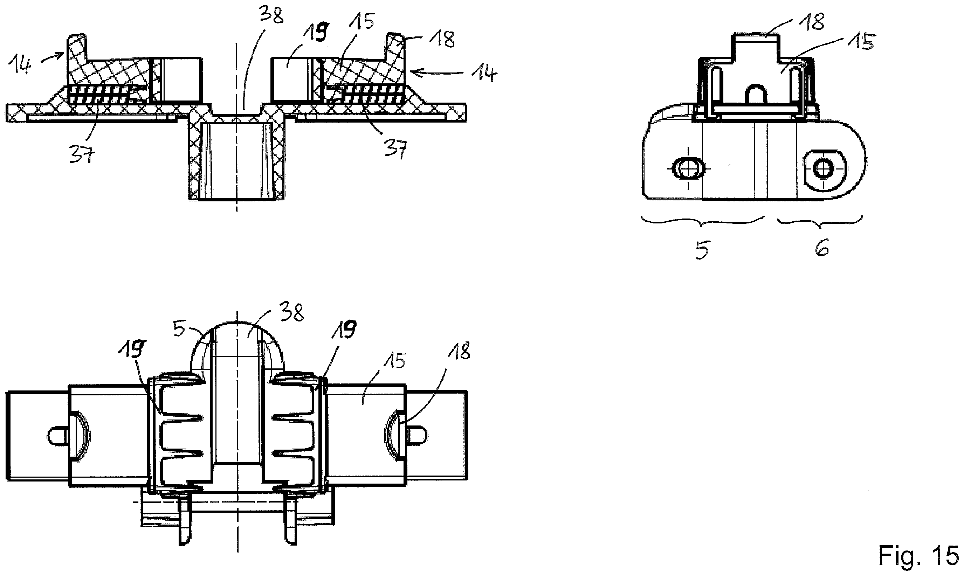

Fig. 15 zeigt das Kettenglied aus Fig. 14, wobei die Mitnehmer 14 hier in der geschlossenen Position dargestellt sind. Das heißt, die Federelemente 37 sind im entspannten, nicht komprimierten Zustand. Der Abstand zwischen den beiden Mitnehmern 14 ist hier der minimal mögliche.

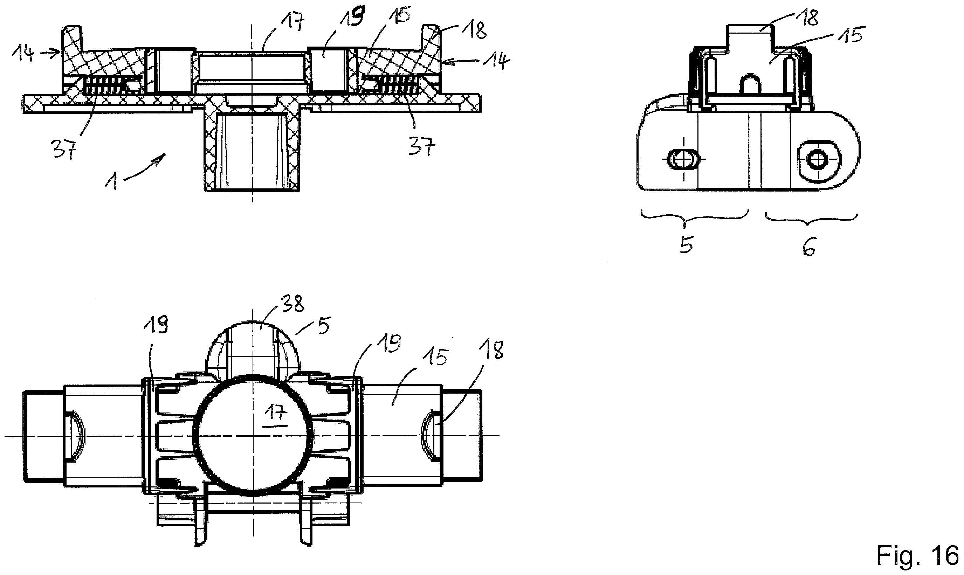

In Fig. 16 ist das Kettenglied aus Fig. 14 bzw. 15 in einer möglichen Halteposition dargestellt, wo sich ein Kleinteil 17 zwischen den Mitnehmern 14 befindet. Durch den Kleinteil 17 werden die Federelemente 37 etwas komprimiert und halten den Kleinteil 17 in dessen Position.

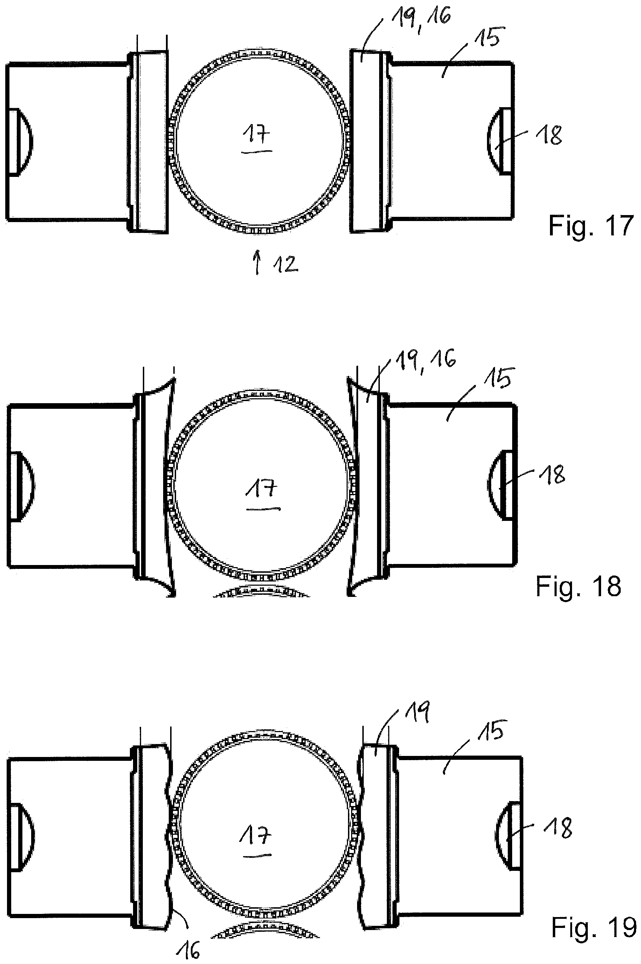

In den Fig. 17 bis 22 sind verschiedene Ausführungen von Greifteilen dargestellt. Der Greifteil 19 in Fig. 17 hat hier genau einen Fortsatz 16 aus elastischem Material zum Halten von Kleinteilen 17, wobei der Fortsatz 16 mit einer ebenen Begrenzungsfläche den Kleinteil 17 berührt. Der Querschnitt des einzigen Fortsatzes 16 weicht hier leicht von der rechteckigen Form ab, der Querschnitt ist trapezförmig zum anderen Mitnehmer 14 hin erweitert. Die Abmessung des Fortsatzes 16 in Förderrichtung 12 ist größer als jene des Befestigungsteils 15. Dieser Greifteil 19 ist für robuste Kleinteile 17 geeignet, besonders hygienisch und in der Benutzung und einfach zu fertigen.

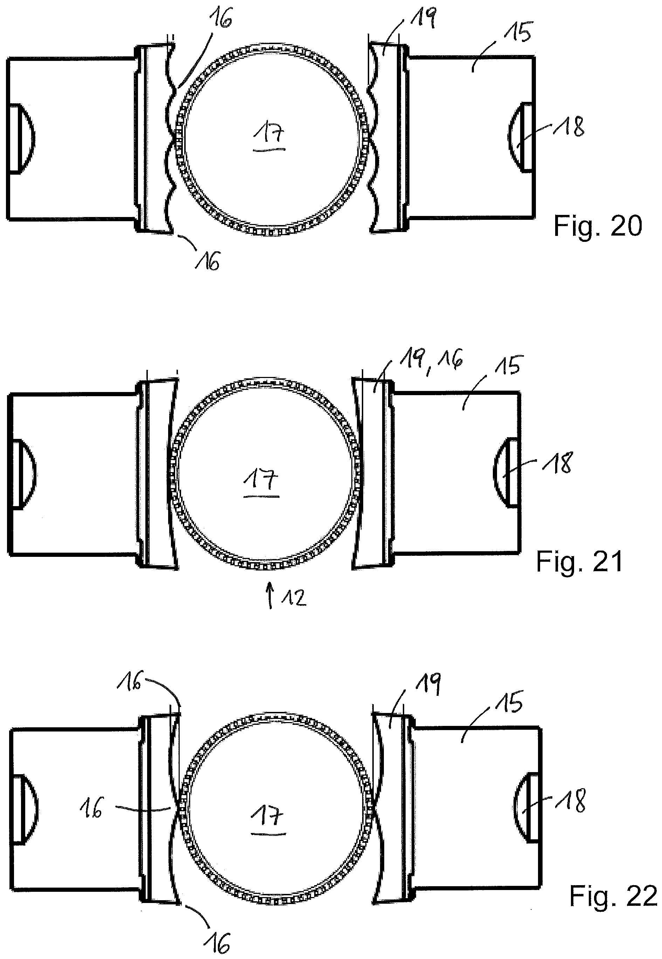

In Fig. 18 hat der Greifteil 19 einen etwa trapezförmigen Querschnitt mit einer Krümmung an der Längsseite, die zum Kleinteil 17 hin ausgerichtet ist. Der Greifteil 19 bildet somit einen gekrümmten Fortsatz 16 aus elastischem Material und kann mit seiner Krümmung den Kleinteil 17 zumindest teilweise zu umschließen. Die Krümmung des Greifteils 19 ist wesentlich geringer als jene des Kleinteils 17. Der Greifteil 19 in Fig. 21 ähnlich zu Fig. 18 ausgebildet, ist aber in Förderrichtung 12 weniger lang.

Der Greifteil 19 der Fig. 19 hat vier kreisbogenförmige Fortsätze 16, wobei die Krümmung der Kreisbögen nach außen, zum Kleinteil 17 hin, gerichtet ist und die Kreisbögen an einer Geraden ausgerichtet sind. Es könnten natürlich auch mehr oder weniger als vier kreisbogenförmige Fortsätze 16 verwendet werden. Die Fig. 20 und 22 hat fünf bzw. drei spitze Fortsätze 16, die ebenfalls durch vier bzw. zwei Kreisbögen gebildet werden, deren Krümmung nach innen gerichtet ist. Die Kreisbögen sind wieder an einer Geraden ausgerichtet, die Spitzen der Fortsätze 16 liegen somit auf einer Geraden.

Die Greifteile 19 der Fig. 19, 20 und 22 haben eine bessere Griffigkeit als die Greifteile der Fig. 17, 18 und 21 bei größerer Weichheit der Fortsätze 16.

Es wäre auch denkbar, auf jedes Kettenglied 1 einer Förderkette jeweils zwei Mitnehmer mit unterschiedlichem Greifteil 19 aufzustecken. Beispielsweise in Förderrichtung 12 gesehen links jeweils glatte Greifteile 19 (nur ein Fortsatz, siehe Mitnehmer in Fig. 17), und rechts jeweils mit gefingerten Fortsätzen 16 (mehrere Fortsätze, siehe z.B. Fig. 14-16 oder Fig. 1-3). Auch beliebige andere links/rechts Kombinationen sind denkbar. Jedoch sollten vorzugsweise bei allen Kettengliedern 1 einer Förderkette links alle Greifteile 19 bzw. Fortsätze 16gleich sein, und ebenso rechts.

### BEZUGSZEICHENLISTE

- 1: Kettenglied
- 2: Auflagefläche
- 3: Auskragung (Mittel zum Aufstecken eines Mitnehmers 14)
- 4: Zahnung
- 5: Kopfteil
- 6: Gabelteil
- 7: Schenkel
- 8: Bohrung (Öffnung)
- 9: Kettenbolzen
- 10: Hohlraum im Kopfteil 5
- 11: Zugstück
- 12: Förderrichtung
- 13: Langloch (Öffnung)
- 14: Mitnehmer
- 15: Befestigungsteil
- 16: Fortsätze des Greifteils 19
- 17: Kleinteil
- 18: Betätigungsmittel (Bolzen) am Befestigungsteil 15
- 19: Greifteil
- 20: Kettenführungsprofil
- 21: Verschiebemittel (Kulisse)
- 22: Vorsprung an der Auskragung 3
- 23: Befestigungslaschen
- 24: Haltesteg des Befestigungsteils 15
- 25: Einhausung
- 26: Bohrungsstummel
- 27: Rippen im Befestigungsteil 15
- 28: Käfig für das Verschiebemittel (Kulisse) 21
- 29: Verstellelement für das Verschiebemittel (Kulisse) 21
- 30: Distanzelement
- 31: Schraube
- 32: Trapezgewindespindel
- 33: Führungselement
- 34: Zahnriemenscheiben
- 35: Zahnriemen
- 36: Oberführung
- 37: Federelement
- 38: Rinne

## Patentansprüche

1. Kettenglied (1) für einen Kettenförderer zur Förderung von Kleinteilen (17), insbesondere von Flaschenverschlüssen, mit einer, insbesondere ebenen, Auflagefläche (2) für Kleinteile, wobei an gegenüberliegenden Seiten des Kettenglieds Mittel (3) zum Aufstecken von zumindest einem Mitnehmer (14) vorgesehen sind, wobei zumindest zwei Mitnehmer (14) vorgesehen sind, die jeweils einen Befestigungsteil (15) aufweisen, der auf ein Mittel (3) zum Aufstecken aufsteckbar ist, sowie einen Greifteil (19), der einen oder mehrere Fortsätze (16) aufweist, die im aufgesteckten Zustand des Mitnehmers (14) zum jeweils anderen Mitnehmer (14) hin ausgerichtet sind, **dadurch gekennzeichnet, dass** der Greifteil aus einem weicheren Material als der Befestigungsteil (15) gefertigt ist, **und dass** in einer Mitte der Auflagefläche (2) in einer Förderrichtung (12) eine Rinne (38) vorgesehen ist, sodass am Ende einer Förderstrecke ein Abnahme-Keil oder eine Abnahme-Klinge in Förderrichtung (12) in die Rinne (38) eingreifen können und Kleinteile gerade über den Abnahme-Keil oder die Abnahme-Klinge weiter geschoben werden können.

2. Kettenglied mit Mitnehmern nach Anspruch 1, **dadurch gekennzeichnet, dass** der Befestigungsteil (15) zum Verschieben am Mittel (3) zum Aufstecken ausgebildet ist.

3. Kettenglied mit Mitnehmern nach Anspruch 1, **dadurch gekennzeichnet, dass** der Greifteil (19) mehrere finger- oder lappenförmige Fortsätze (16) aus elastischem Material zum Halten von Kleinteilen (17) aufweist.

4. Kettenglied mit Mitnehmern nach Anspruch 1, **dadurch gekennzeichnet, dass** der Greifteil (19) genau einen Fortsatz (16) aus elastischem Material zum Halten von Kleinteilen (17) aufweist oder bildet, welcher Fortsatz (16) ausgebildet ist, um im aufgesteckten Zustand des Mitnehmers (14) einen Kleinteil (17) mit zumindest einer ebenen Begrenzungsfläche zu berühren.

5. Kettenglied mit Mitnehmern nach Anspruch 1, **dadurch gekennzeichnet, dass** der Greifteil (19) genau einen gekrümmten Fortsatz (16) aus elastischem Material zum Halten von Kleinteilen (17) aufweist, welcher Fortsatz () ausgebildet ist, um im aufgesteckten Zustand des Mitnehmers (14) einen Kleinteil (17) mit seiner Krümmung zumindest teilweise zu umschließen.

6. Kettenglied mit Mitnehmern nach einem der Ansprüche 1 bis 5, **dadurch gekennzeichnet, dass** der Greifteil (19) aus einem Stück gefertigt ist.

7. Kettenglied mit Mitnehmern nach einem der Ansprüche 1 bis 6, **dadurch gekennzeichnet, dass** der Befestigungsteil (15) und der Greifteil (19) durch ein gemeinsames Herstellungsverfahren, wie ein Zwei-Komponenten-Spritzgussverfahren, einteilig hergestellt sind.

8. Kettenglied mit Mitnehmern nach einem der Ansprüche 1 bis 7, **dadurch gekennzeichnet, dass** die Mitnehmer (14) im aufgesteckten Zustand durch Federelemente zum jeweils gegenüberliegenden Mitnehmer (14) hin vorgespannt sind.

9. Förderkette umfassend mehrere aufeinanderfolgende Kettenglieder (1) nach einem der Ansprüche 1 bis 8.

10. Kettenförderer umfassend eine Förderkette nach Anspruch 9 sowie zumindest einen Antrieb.

11. Kettenförderer nach Anspruch 10, **wobei** zumindest abschnittsweise auf beiden Seiten der Förderkette parallel zur Förderrichtung (12) Kettenführungsprofile (20) vorgesehen sind, auf denen die Förderkette mit ihren Mitteln (3) zum Aufstecken von zumindest einem Mitnehmer (14) aufliegt.

12. Kettenförderer nach Anspruch 10 oder 11, umfassend Kettenglieder (1) und Mitnehmer (14), wobei der Befestigungsteil (15) ein Betätigungsmittel (18) zum Verschieben am Mittel (3) zum Aufstecken aufweist, **wobei** Verschiebemittel (21), insbesondere relativ zur Förderkette feststehende Kulissen, vorgesehen sind, mit welchen die Betätigungsmittel (18) zum Verschieben der Mitnehmer (14) längs der Mittel (3) zum Aufstecken kontaktierbar sind.

13. Kettenförderer nach Anspruch 12, **wobei** die Verschiebemittel (21) quer zur Förderrichtung (12) verstellbar sind, um einen vorgegebenen Abstand zwischen zwei gegenüber liegenden Mitnehmern (14) eines Kettengliedes einstellen zu können.

14. Kettenförderer nach Anspruch 12 oder 13, **wobei** der Abstand zwischen Förderkette und Verschiebemittel (21) einstellbar ist, um einen Eingriff zwischen dem Verschiebemittel (21) und Mitnehmern (14) unterschiedlicher Höhe sicherstellen zu können.

15. Verwendung eines Kettenförderers nach einem der Ansprüche 10 bis 14 zum Fördern von Verschlüssen, insbesondere von Flaschenverschlüssen, aus Kunststoff oder Metall.

## Claims

1. Chain link (1) for a chain conveyor for conveying small parts (17), in particular bottle closures, having a, in particular flat, support surface (2) for small parts, wherein means (3) for fitting at least one carrier (14) are provided on opposite sides of the chain link, **whereas** at least two carriers (14) are provided, each having a fastening part (15) which can be fitted onto a means (3) for fitting, and a gripping part (19), which has one or more extensions (16) which, when the carrier (14) is in the fitted state, are directed towards the respective other carrier (14), **characterized in that** the gripping part is made of a softer material than the fastening part (15), **and that** a groove (38) is provided in a center of the support surface (2) in a conveying direction (12), so that at the end of a conveying section, a removal wedge or a removal blade can engage in the groove (38) in the conveying direction (12) and small parts can be pushed straight on over the removal wedge or the removal blade.

2. Chain link with carriers according to claim 1, **characterized in that** the fastening part (15) is designed for displacement on the means (3) for fitting.

3. Chain link with carriers according to claim 1, **characterized in that** the gripping part (19) has a plurality of finger-shaped or lobe-shaped extensions (16) of elastic material for holding small parts (17).

4. Chain link with carriers according to claim 1, **characterized in that** the gripping part (19) has or forms exactly one extension (16) of elastic material for holding small parts (17), which extension (16) is designed to contact a small part (17) with at least one flat boundary surface in the fitted state of the carrier (14).

5. Chain link with carriers according to claim 1, **characterized in that** the gripping part (19) has exactly one curved extension (16) of elastic material for holding small parts (17), which extension (1) is designed to at least partially enclose a small part (17) with its curvature in the fitted state of the carrier (14).

6. Chain link with carriers according to one of the claims 1 to 5, **characterized in that** the gripping part (19) is made of one piece.

7. Chain link with carriers according to one of claims 1 to 6, **characterized in that** the fastening part (15) and the gripping part (19) are manufactured in one piece by a common manufacturing process, such as a two-component injection molding process.

8. Chain link with carriers according to one of claims 1 to 7, **characterized in that** the carriers (14) are pretensioned in the fitted state towards the respective opposite carrier (14) by spring elements.

9. Conveyor chain comprising a plurality of successive chain links (1) according to one of claims 1 to 8.

10. Chain conveyor comprising a conveyor chain according to claim 9 and at least one drive.

11. Chain conveyor according to claim 10, **wherein** chain guide profiles (20) are provided at least in sections on both sides of the conveyor chain parallel to the conveying direction (12), on which profiles the conveyor chain rests with its means (3) for fitting of at least one carrier (14) .

12. Chain conveyor according to claim 10 or 11, comprising chain links (1) and carriers (14), wherein the fastening part (15) has an actuating means (18) for displacement on the means (3) for fitting, **wherein** displacement means (21), in particular links which are fixed relative to the conveyor chain, are provided, with which the actuating means (18) can be contacted for displacing the carriers (14) along the means (3) for fitting.

13. Chain conveyor according to claim 12, **wherein** the displacement means (21) are adjustable transversely to the conveying direction (12) in order to be able to set a predetermined distance between two opposite carriers (14) of a chain link.

14. Chain conveyor according to claim 12 or 13, **wherein** the distance between the conveyor chain and displacement means (21) is adjustable to ensure engagement between the displacement means (21) and carriers (14) of different heights.

15. Use of a chain conveyor according to one of claims 10 to 14 for conveying closures, in particular bottle closures, made of plastic or metal.

## Revendications

1. Maillon de chaîne (1) pour un convoyeur à chaîne destiné au transport de petites pièces (17), en particulier de bouchons de bouteille, avec une surface de pose (2), en particulier plate, pour des petites pièces, dans lequel sont prévus sur des côtés opposés du maillon de chaîne des moyens (3) pour emboîter au moins un entraîneur (14), dans lequel sont prévus au moins deux entraîneurs (14) qui présentent chacun une partie de fixation (15) qui peut être emboîtée sur un moyen (3) d'emboîtement, ainsi qu'une partie de préhension (19) qui présente une ou plusieurs saillies (16) qui sont orientées, dans l'état emboîté de l'entraîneur (14), vers l'autre entraîneur (14), **caractérisé en ce que** la partie de préhension est faite d'un matériau plus mou que la partie de fixation (15) et **en ce qu'**une rainure (38) est prévue au milieu de la surface de pose (2) dans un sens de transport (12), de sorte qu'au bout d'une distance de transport, un coin de prélèvement ou une lame de prélèvement peut se mettre en prise dans la rainure (38) dans le sens de transport (12) et des petites pièces peuvent être poussées plus loin en ligne droite à l'aide du coin de prélèvement ou de la lame de prélèvement.

2. Maillon de chaîne avec des entraîneurs selon la revendication 1, **caractérisé en ce que** la partie de fixation (15) est conçue pour un déplacement sur le moyen (3) d'emboîtement.

3. Maillon de chaîne avec des entraîneurs selon la revendication 1, **caractérisé en ce que** la partie de préhension (19) présente plusieurs saillies (16) en forme de doigts ou de pattes en matériau élastique pour retenir des petites pièces (17).

4. Maillon de chaîne avec des entraîneurs selon la revendication 1, **caractérisé en ce que** la partie de préhension (19) présente ou forme exactement une saillie (16) en matériau élastique pour retenir des petites pièces (17), laquelle saillie (16) est conçue pour toucher une petite pièce (17) avec au moins une surface de délimitation plane quand l'entraîneur (14) est dans l'état emboîté.

5. Maillon de chaîne avec des entraîneurs selon la revendication 1, **caractérisé en ce que** la partie de préhension (19) présente exactement une saillie courbe (16) en matériau élastique pour retenir des petites pièces (17), laquelle saillie est conçue pour entourer au moins partiellement une petite pièce (17) avec sa courbure quand l'entraîneur (14) est dans l'état emboîté.

6. Maillon de chaîne avec des entraîneurs selon l'une des revendications 1 à 5, **caractérisé en ce que** la partie de préhension (19) est fabriquée d'une pièce.

7. Maillon de chaîne avec des entraîneurs selon l'une des revendications 1 à 6, **caractérisé en ce que** la partie de fixation (15) et la partie de préhension (19) sont fabriquées d'une pièce par un procédé de fabrication commun, tel qu'un procédé de moulage par injection à deux composants.

8. Maillon de chaîne avec des entraîneurs selon l'une des revendications 1 à 7, **caractérisé en ce que** les entraîneurs (14) dans l'état emboîté sont précontraints par des éléments de ressort vers des entraîneurs (14) opposés.

9. Chaîne de transport comprenant plusieurs maillons de chaîne (1) successifs selon l'une des revendications 1 à 8.

10. Convoyeur à chaîne comprenant une chaîne de transport selon la revendication 9, ainsi qu'au moins un entraînement.

11. Convoyeur à chaîne selon la revendication 10, dans lequel sont prévus au moins par sections sur les deux côtés de la chaîne de transport, parallèlement au sens de transport (12), des profilés de guidage de chaîne (20) sur lesquels la chaîne de transport repose avec ses moyens (3) d'emboîtement d'au moins un entraîneur (14).

12. Convoyeur à chaîne selon la revendication 10 ou 11, comprenant des maillons de chaîne (1) et des entraîneurs (14), dans lequel la partie de fixation (15) présente un moyen d'actionnement (18) pour la translation sur le moyen (3) d'emboîtement, dans lequel sont prévus des moyens de translation (21), en particulier des coulisseaux fixes par rapport à la chaîne de transport, avec lesquels les moyens d'actionnement (18) peuvent être mis en contact pour la translation des entraîneurs (14) le long des moyens (3) d'emboîtement.

13. Convoyeur à chaîne selon la revendication 12, dans lequel les moyens de translation (21) sont déplaçables transversalement par rapport au sens de transport (12) pour pouvoir régler une distance prédéterminée entre deux entraîneurs (14) d'un maillon de chaîne qui se font face.

14. Convoyeur à chaîne selon la revendication 12 ou 13, dans lequel la distance entre la chaîne de transport et les moyens de translation (21) est réglable afin d'assurer une prise entre le moyen de translation (21) et des entraîneurs (14) de hauteur différente.

15. Utilisation d'un convoyeur à chaîne selon l'une des revendications 10 à 14 pour le transport de fermetures, en particulier de bouchons de bouteille, en plastique ou en métal.
